(19) Europäisches Patentamt
European Patent Office
Office européen des brevets

(11) **EP 4 727 220 A1**

(12) **EUROPEAN PATENT APPLICATION**
published in accordance with Art. 153(4) EPC

(43) Date of publication:
**15.04.2026   Bulletin 2026/16**

(21) Application number: **24840001.2**

(22) Date of filing: **05.07.2024**

(51) International Patent Classification (IPC):
**H04W 52/02** (2009.01)   **H04W 76/27** (2018.01)
**H04W 24/08** (2009.01)   **H04W 88/02** (2009.01)

(52) Cooperative Patent Classification (CPC):
Y02D 30/70

(86) International application number:
**PCT/KR2024/009533**

(87) International publication number:
**WO 2025/014189 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **07.07.2023   KR 20230088247**

(71) Applicant: **Samsung Electronics Co., Ltd.**
**Suwon-si, Gyeonggi-do 16677 (KR)**

(72) Inventors:
• **CHOI, Seunghoon**
**Suwon-si, Gyeonggi-do 16677 (KR)**
• **YANG, Hyewon**
**Suwon-si, Gyeonggi-do 16677 (KR)**
• **LEE, Jaewon**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND APPARATUS FOR RADIO LINK MONITORING BY TERMINAL HAVING WAKE-UP RECEIVER IN WIRELESS COMMUNICATION SYSTEM**

(57)   The present disclosure relates to a 5G or 6G communication system for supporting a higher data transmission rate. In addition, the present disclosure relates to a method and an apparatus for radio link monitoring by a terminal having a wake-up receiver in a wireless communication system and, more particularly, the purpose of the present disclosure is to solve an issue of excessive power consumption of a terminal and achieve high energy efficiency in a wireless communication system. The present disclosure defines a terminal operation required to monitor a radio link when a terminal having a wake-up receiver is configured to receive a wake-up signal through the wake-up receiver in an RRC_CONNECTED state. In addition, the present disclosure relates to a method and an apparatus for operating a wake-up receiver by a terminal according to a radio link.

FIG. 1

**Description**

**[Technical Field]**

The disclosure relates to a method and an apparatus for performing radio link monitoring by a terminal having a wake-up receiver in a wireless communication system. More specifically, the disclosure provides a solution to the problem of excessive power consumption of a terminal in a wireless communication system and achieve a high energy efficiency. The disclosure defines terminal operations necessary for radio link monitoring in a case in which a terminal having a wake-up receiver is configured to receive a wake-up signal through the wake-up receiver in an RRC_CONNECTED state. In addition, the disclosure relates to a method and an apparatus for operating a wake-up receiver by a terminal according to the radio link.

**[Background Art]**

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, there is a need for ways to perform radio link monitoring of wakeup receiver-equipped terminals in order to solve the problem of excessive power consumption of terminals and achieve high energy efficiency.

**[Disclosure of Invention]**

**[Technical Problem]**

The disclosure provides a solution to the problem of excessive power consumption of a terminal in a wireless communication system and achieve a high energy efficiency.

In addition, the disclosure defines the terminal operation necessary for radio link monitoring in a case in which a terminal having a wake-up receiver is configured to receive a wake-up signal through the wake-up receiver in an RRC_CONNECTED state.

In addition, the disclosure provides a method and an apparatus for operating a wake-up receiver by a terminal according to the radio link.

**[Solution to Problem]**

A method of a terminal in a communication system according to an embodiment of the disclosure may include receiving, from a base station, configuration information including information for receiving a wake-up signal (WUS) and information for radio link monitoring (RLM), and performing radio link monitoring by using at least one of a main radio (MR) and a wake-up receiver (WUR), based on the configuration information.

A terminal in a communication system according to an embodiment of the disclosure may include a transceiver and a controller configured to receive, from a base station, configuration information including information for receiving a wake-up signal (WUS) and information for radio link monitoring (RLM), and perform radio link monitoring by using at least one of a main radio (MR) and a wake-up receiver (WUR), based on the configuration information.

**[Advantageous Effects of Invention]**

The disclosure provides an apparatus and a method capable of effectively providing services in a wireless communication system.

**[Brief Description of Drawings]**

FIG. 1 illustrates a basic structure of a time-frequency resource domain in a wireless communication system according to various embodiments of the disclosure.

FIG. 2 illustrates a beam sweeping operation and a time domain mapping structure of a synchronization signal according to various embodiments of the disclosure.

FIG. 3 illustrates a flow of signals for performing a random access (RA) according to various embodiments of the disclosure.

FIG. 4 illustrates a flow of signals used by a UE to report UE capability information to a base station according to various embodiments of the disclosure.

FIG. 5 illustrates an example of state transitions of a base station and a UE and a state of the UE according to a base station state, according to various embodiments of the disclosure.

FIG. 6 illustrates an example of a radio link monitoring scheme of a UE having a wake-up receiver according to various embodiments of the disclosure.

FIG. 7 illustrates an example of a radio link monitoring scheme of a UE having a wake-up receiver according to various embodiments of the disclosure.

FIG. 8 illustrates an example of a radio link monitoring scheme of a UE having a wake-up receiver according to various embodiments of the disclosure.

FIG. 9 is a flowchart illustrating an operation for radio link monitoring of a UE having a wake-up receiver according to various embodiments of the disclosure.

FIG. 10 is a flowchart illustrating operation of a base station according to various embodiments of the disclosure.

FIG. 11 illustrates a structure of a UE according to various embodiments of the disclosure.

FIG. 12 illustrates a structure of a base station according to various embodiments of the disclosure.

**[Mode for the Invention]**

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". As used herein, for example, the expression "transmitting a physical channel" may be construed as having the same meaning as the expression "transmitting data or a signal over a physical channel".

In the following description of the disclosure, higher signaling refers to a signal transfer scheme from a base station to a terminal via a downlink data channel of a physical layer, or from a terminal to a base station via an uplink data channel of a physical layer. The higher signaling may also be understood as radio resource control (RRC) signaling or a media access control (MAC) control element (CE).

Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications. In addition, the term "terminal" may refer to not only cellular phones, smartphones, Internet of things (IoT) devices, and sensors, but also other wireless communication devices.

In the following description, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above. Furthermore, in the following description of various embodiments, systems based on LTE, LTE-A, or NR may be described by way of example, but various embodiments of the disclosure may also be applied to other communication systems having similar technical backgrounds or channel types. Moreover, based on determinations by those skilled in the art, various embodiments of the disclosure may also be applied to other communication systems through some modifications without significantly departing from the scope of the embodiments of the disclosure.

In order to process mobile data traffic which has recently increased exponentially, initial standards of new radio (NR) access technology or 5th generation (5G) systems which are next-generation communication systems after long term evolution (LTE) (or evolved universal terrestrial radio access (E-UTRA)) and LTE-advanced (LTE-A) (or E-UTRA evolution) have been completed. While legacy mobile communication systems have focused on conventional voice/data communication, 5G systems aim to satisfy various services and requirements, such as an enhanced mobile broadband (eMBB) service for improving legacy voice/data communication, an ultra-reliable and low latency communication (URLLC) service, and a massive machine type communication (MTC) service supporting massive machine-to-machine communication.

The system transmission bandwidth per single carrier of legacy LTE and LTE-A is limited to a maximum of 20MHz, but 5G systems aim to provide super-fast data services up to multiple Gbps by using super-broad bandwidths far wider than the same. Accordingly, 5G systems consider ultrahigh-frequency bands ranging from multiple GHz to a maximum of 100 GHz, in which it is relatively easy to secure ultrawide -bandwidth frequencies, as candidate frequencies. Additionally, it is possible to secure broad-bandwidth frequencies for 5G systems through frequency rearrangement or allocation among frequency bands ranging from hundreds of MHz to multiple GHz used in legacy mobile communication systems.

Radio waves in ultrahigh frequency bands have millimeter-level wavelengths and thus are also referred to as millimeter waves (mmWave). However, the pathloss of radio waves in ultrahigh frequency bands increases in proportion to the frequency band, thereby reducing the coverage of the mobile communication systems.

In order to overcome the shortcoming of coverage reduction in ultrahigh frequency bands, a beamforming technology is applied such that the distance reached by radio waves is increased by concentrating the energy radiated by the radio waves at a specific target point by using multiple antennas. For example, signals to which the beamforming technology is applied have a smaller beam width, and radiated energy is concentrated within the smaller beam width, thereby increasing the distance reached by radio waves. The beamforming technology may be applied to each of the transmission and reception ends. In addition to the increased coverage, the beamforming technology is also advantageous in that interference is reduced in regions in directions other than the beamforming direction. Appropriate operations of the beamforming technology require a method for accurately measuring transmitted/received beams and sending feedback. The beamforming technology may be applied to a control channel or a data channel having one-to-one correspondence between a UE and a base station. In addition, the beamforming technology may also be applied to a control channel and a data channel for transmitting a common signal transmitted from a base station to multiple UEs in the system, such as a synchronization signal, a physical broadcast channel (PBCH), and system information, in order to increase the coverage. When the beamforming technology is applied to a common signal, a beam sweeping technology is additionally applied such that the signal is transmitted after changing the beam direction, thereby ensuring that the common signal can reach a UE existing at a specific location inside the cell.

As another requirement of 5G systems, an ultra-low latency service is required such that the transmission delay between the transmission and reception ends is about 1ms. In an attempt to reduce the transmission delay, there is a need for frame structure design based on a shorter transmission time interval (TTI) than LTE and LTE-A. The TTI is the basic time unit for performing scheduling, and legacy LTE and LTE-A have a TTI of 1ms, which corresponds to the length of one subframe. For example, the short TTI, on which 5G systems are based in order to meet the requirement regarding the ultra-low latency service, may be 0.5ms, 0.25ms, 0.125ms, or the like, which is shorter than legacy LTE and LTE-A.

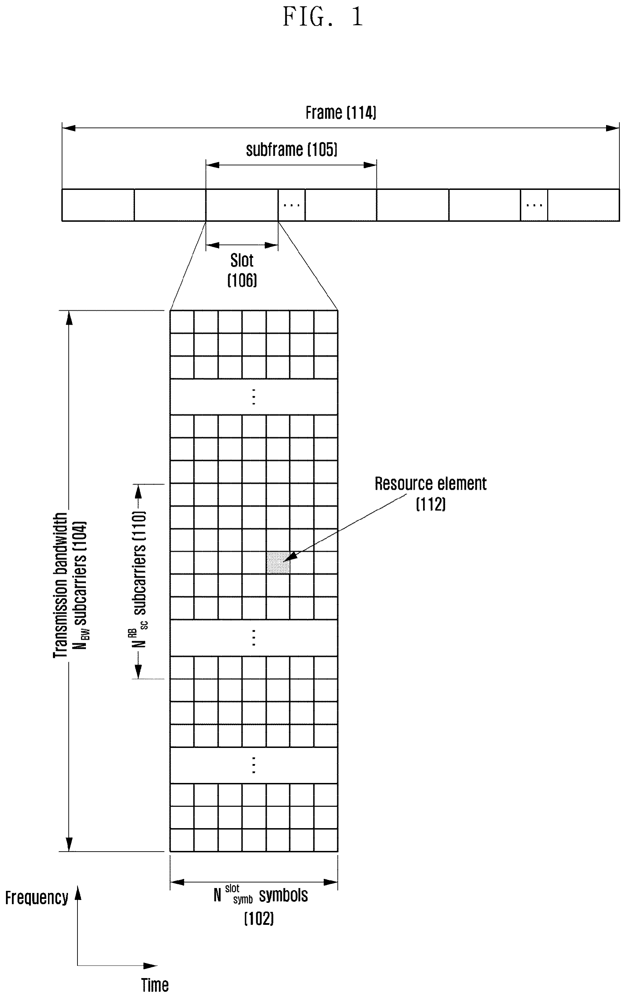

FIG. 1 illustrates a basic structure of a time-frequency resource domain in a wireless communication system according to various embodiments of the disclosure. Specifically, FIG. 1 illustrates the basic structure of a time-frequency resource domain which is a radio resource domain used to transmit data or control channels in a 5G system.

Referring to FIG. 1, the horizontal axis in FIG. 1 denotes the time domain, and the vertical axis denotes the frequency domain. The minimum transmission unit in the time domain of the 5G system is an orthogonal frequency division multiplexing (OFDM) symbol, a group of $N_{symb}^{slot}$ symbols 102 may constitute one slot 106, and a group of $N_{slot}^{subframe}$ slots may constitute one subframe 105. The subframe's length may be 1.0ms, and a group of ten subframes may constitute a 10ms frame 114. The minimum transmission unit in the frequency domain is a subcarrier, and a total of $N_{BW}$ subcarriers 104 may constitute the entire system transmission bandwidth.

The basic unit of resources in the time-frequency domain is a resource element (RE) 112, which may be represented by an OFDM symbol index and a subcarrier index. A resource block (RB) or a physical resource block (PRB) may be defined by consecutive $N_{sc}^{RB}$ subcarriers 110 in the frequency domain. In the 5G system, $N_{sc}^{RB} = 12$, and the data rate may increase in proportion to the number of RBs scheduled for a UE.

In wireless communication systems, a base station may map data at the RB level, and may generally schedule RBs constituting one slot with regard to a specific UE. For example, the basic time unit to perform scheduling in 5G systems may be a slot, and the basic frequency unit to perform scheduling may be an RB.

The number of OFDM symbols, $N_{symb}^{slot}$, is determined according to the length of a cyclic prefix (CP) which is added to each symbol in order to prevent inter-symbol interference. For example, if a normal CP is applied, $N_{symb}^{slot} = 14$ and, if an extended CP is applied, $N_{symb}^{slot} = 12$. The extended CP is applied to a system having a longer radio-wave transmission distance than the normal CP, thereby maintaining inter-symbol orthogonality. In the case of the normal CP, the ratio between the CP length and the symbol length may be maintained at a constant value such that the overhead due to the CP remains constant regardless of the subcarrier spacing. For example, the symbol length may increase if the subcarrier spacing decreases, thereby increasing the CP length. To the contrary, the symbol length may decrease if the subcarrier spacing increases, thereby decreasing the CP length. The symbol length and the CP length may be inversely proportional to the subcarrier spacing.

In order to satisfy various services and requirements in wireless communication systems, various frame structures may be supported by adjusting the subcarrier spacing. For example, in terms of the operating frequency band, the larger the subcarrier spacing, the more advantageous for restoration of phase noise in high-frequency bands. In terms of the transmission time, if the subcarrier spacing increases, the symbol length in the time domain decreases. In terms of the cell size, the larger the CP length, the larger cell can be supported, meaning that the smaller the subcarrier spacing, the larger cell can be supported. The term "cell" refers to a region covered by one gNB in connection with mobile communication.

The subcarrier spacing, the CP length, and the like correspond to information indispensable to OFDM transmission/reception, and a base station and a UE need to recognize the subcarrier spacing, the CP length, and the like as mutually common values such that efficient transmission/reception is possible.

Table 1 below describes the relationship between the subcarrier spacing configuration ($\mu$), the subcarrier spacing ($\Delta f$), and the CP length supported in 5G systems.

[Table 1]

| $\mu$ | $\Delta f = 2^{\mu} \cdot 15$[kHz] | **Cyclic prefix** |
|---|---|---|
| 0 | 15 | Normal |
| 1 | 30 | Normal |
| 2 | 60 | Normal, Extended |
| 3 | 120 | Normal |

(continued)

| $\mu$ | $\Delta f = 2^{\mu} \cdot 15$[kHz] | Cyclic prefix |
|---|---|---|
| 4 | 240 | Normal |

Table 2 below enumerates the number ( $N_{symb}^{slot}$ ) of symbols per one slot, the number( $N_{symb}^{slot}$ ) of slots per one frame, and the number ( $N_{slot}^{subframe,\mu}$ ) of slots per one subframe with regard to each subcarrier spacing configuration ($\mu$) in the case of a normal CP.

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 below enumerates the number ( $N_{symb}^{slot}$ ) of symbols per one slot, the number ( $N_{slot}^{frame,\mu}$ ) of slots per one frame, and the number ( $N_{slot}^{subframe,\mu}$ ) of slots per one subframe with regard to each subcarrier spacing configuration ($\mu$) in the case of an extended CP.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In the early phase of introduction of 5G systems, coexistence with legacy LTE and/or LTE-A (hereinafter, referred to as LTE/LTE-A) or dual mode operation has been expected. Accordingly, legacy LTE/LTE-A may provide UEs with stable system operations, and the 5G systems may play the role of providing UEs with improved services. Therefore, the frame structure of 5G systems needs to include at least the frame structure of LTE/LTE-A or an essential parameter set (e.g., subcarrier spacing = 15kHz).

For example, a comparison between a frame structure having a subcarrier spacing configuration $\mu$=0 (hereinafter, referred to as frame structure A) and a frame structure having a subcarrier spacing configuration $\mu$=1 (hereinafter, referred to as frame structure B) shows that, compared with frame structure A, frame structure B has double the subcarrier spacing and the RB size, and has half the slot length and the symbol length. In the case of frame structure B, two slots may constitute one subframe, and 20 subframes may constitute one frame.

To generalize the frame structure of 5G systems, the subcarrier spacing, the CP length, the slot length, and the like, which constitute a necessary parameter set, of respective frame structures are related so as to correspond to integer multiples with each other, thereby providing a high degree of extendibility. In addition, a subframe having a fixed length of 1ms may be defined to represent a reference time unit unrelated to the frame structure.

The frame structure may be applied according to various scenarios. In terms of the cell size, the larger the CP length, the larger cells can be supported, meaning that frame structure A may support larger cells than frame structure B. In terms of the operating frequency band, the larger the subcarrier spacing, the more advantageous for restoration of phase noise in high-frequency bands. Therefore, frame structure B can support higher operating frequencies than frame structure A. In terms of services, the smaller the slot length (basic time unit of scheduling), the more advantageous to supporting a super-low-latency service such as URLLC, meaning that frame structure B may be more appropriate for an URLLC service than frame structure A.

As used in the following description of the disclosure, the uplink may refer to a radio link via which a UE transmits data or control signals to a base station, and the downlink may refer to a radio link via which the base station transmits data or control signals to the UE.

In an initial access step in which a user equipment initially accesses a system, the user equipment may perform downlink time and frequency domain synchronization and acquire a cell identifier (ID) from a synchronization signal, transmitted by a base station, through a cell search. In addition, the UE may receive a physical broadcast channel (PBCH) by using the acquired cell ID and acquire a master information block (MIB) as mandatory system information from the PBCH. Additionally, the UE may receive system information (system information block (SIB)) transmitted by the base station to acquire cell-common transmission and reception-related control information. The cell-common transmission and reception-related control information may include random access (RA)-related control information, paging-related control information, common control information for various physical channels, etc.

A synchronization signal is a signal that serves as a reference for a cell search, and for each frequency band, a subcarrier spacing may be applied adaptively to a channel environment, such as phase noise. For a data channel or a control channel, in order to support various services as described above, a subcarrier spacing may be applied adaptively depending on a service type.

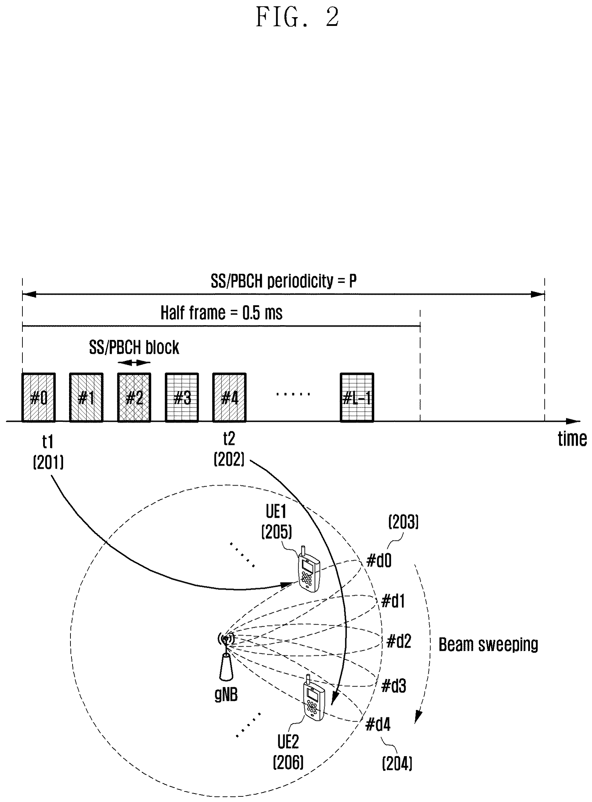

FIG. 2 illustrates a beam sweeping operation and a time domain mapping structure of a synchronization signal according to various embodiments of the disclosure.

For description purposes, the following elements may be defined in advance.

- Primary synchronization signal (PSS): A PSS is a signal that serves as a reference for DL time/frequency synchronization, and provides a part of cell ID information.
- Secondary synchronization signal (SSS): An SSS may serve as a reference for DL time/frequency synchronization, and may provide the other part of the cell ID information. Additionally, the SSS may serve as a reference signal for PBCH demodulation of a PBCH.
- Physical broadcast channel (PBCH): A PBCH may provide a master information block (MIB) which is mandatory system information required for transmission and reception of a data channel and a control channel of a terminal. The mandatory system information may include search space-related control information indicating radio resource mapping information of a control channel, scheduling control information for a separate data channel for transmission of system information, a system frame number (SFN) which is a frame unit index that serves as a timing reference, and other information.
- Synchronization signal/PBCH block (SS/PBCH block) or SSB: An SS/PBCH block may be configured by N OFDM symbols and may include a combination of a PSS, an SSS, a PBCH, etc. For a system to which a beam sweeping technology is applied, an SS/PBCH block may be a minimum unit to which beam sweeping is applied. In the 5G system, N=4 may be satisfied. A base station may transmit up to a maximum of L SS/PBCH blocks, and the L SS/PBCH blocks may be mapped within a half frame (0.5ms). The L SS/PBCH blocks may be periodically repeated at predetermined periods P. The base station may inform a UE of period P via signaling. If there is no separate signaling of period P, the UE may apply a previously agreed default value.

FIG. 2 illustrates an example in which beam sweeping is applied in units of SS/PBCH blocks over time. In the example of FIG. 2, UE 1 205 may receive an SS/PBCH block by means of a beam emitted in direction #d0 203 by beamforming applied to SS/PBCH block #0 at time point t1 201. In addition, UE 2 206 may receive an SS/PBCH block by means of a beam emitted in direction #d4 204 by beamforming applied to SS/PBCH block #4 at time point t2 202. The UE may acquire, from the base station, an optimal synchronization signal via a beam emitted in the direction where the UE is located. For example, it may be difficult for UE 1 205 to acquire time/frequency synchronization and mandatory system information from the SS/PBCH block through the beam emitted in direction #d4 far away from the location of UE 1.

In addition to the initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an SS/PBCH block of the adjacent cell in order to determine the radio link quality of the adjacent cell and acquire time/frequency synchronization with the adjacent cell.

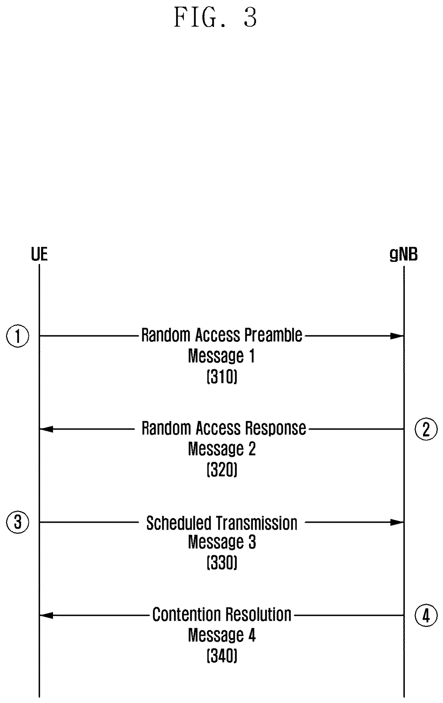

After acquiring an MIB and system information from the base station through the initial access procedure, the UE may perform a random access procedure in order to switch a link to the base station to a connected state (or RRC_CONNECTED state). Upon completing the random access procedure, the UE switches to a connected state in which one-to-one communication between the base station and the UE is possible. Hereinafter, a random access procedure will be described in detail with reference to FIG. 3.

FIG. 3 illustrates a flow of signals for performing a random access (RA) according to various embodiments of the disclosure.

Referring to FIG. 3, in step 310, the UE may transmit a random access preamble to the base station (gNB). The random access preamble, which is a message initially transmitted by the UE in the random access procedure, may be referred to as message 1. The gNB may measure the transmission delay value between the UE and the gNB from the random access preamble, and may conduct uplink synchronization. The UE may arbitrarily select which random access preamble is to be used, from a random access preamble set given by system information in advance. The initial transmission power of the random access preamble may be determined by the pathloss between the gNB and the UE, measured by the UE. Furthermore, the UE may determine the transmission beam direction of the random access preamble from a synchronization signal received from the gNB, thereby transmitting the random access preamble.

In step 320, the gNB may transmit a random access response (RAR) (or message 2) regarding the random access preamble received in step 310. The gNB may transmit an uplink transmission timing adjustment command to the UE, based on a transmission delay value measured from the random access preamble. The gNB may transmit a power control command and an uplink resource to be used by the UE, as scheduling information, to the UE. The scheduling information transmitted by the gNB may include control information regarding the UE's uplink transmission beam.

If the UE fails to receive a random access response (RAR) (or message 2) which is scheduling information regarding message 3 from the gNB within a predetermined time in step 320, the UE may perform step 310 again. When performing step 310 again, the UE may transmit the random access preamble after increasing the transmission power thereof by a predetermined step (power ramping), thereby increasing the probability that the gNB will receive the random access preamble.

In step 330, the UE may transmit uplink data (i.e., message 3) including the UE's ID to the gNB by using the uplink resource allocated thereto in step 320. The UE may transmit uplink data including the UE's ID to the gNB through a physical uplink shared channel (PUSCH). The transmission timing of the PUSCH for transmitting message 3 may follow the timing control command received from the gNB in step 320. The transmission power of the PUSCH for transmitting message 3 may be determined in consideration of a power control command received from the gNB in step 320 and the random access preamble's power ramping value. The PUSCH for transmitting message 3 may refer to an uplink data signal initially transmitted to the gNB by the UE after the UE has transmitted a random access preamble.

In step 340, upon determining that the UE has performed a random access without contention with other UEs, the gNB may transmit data (message 4) including the ID of the UE which has transmitted uplink data in 330 to the UE. Upon receiving the signal transmitted by the gNB in step 340 from the gNB, the UE may determine that the random access has succeeded. The UE may transmit hybrid automatic repeat request acknowledgement (HARQ-ACK) information to the gNB through a physical uplink control channel (PUCCH) to indicate whether or not message 4 has been received successfully.

If the gNB fails to receive a data signal from the UE due to contention between the data transmitted by the UE in step 330 and data from another UE, the gNB may no longer transmit data to the UE. If the UE fails to receive data transmitted from the gNB in step 340 within a predetermined time, the UE may determine that the random access procedure has failed and may restart from step 310.

Upon successfully completing the random access procedure, the UE may be switched to a connected state (or RRC_CONNECTED state), and one-to-one communication between the gNB and the UE may become possible. The gNB may receive UE capability information reported by the UE in the connected state (or RRC_CONNECTED state), and may adjust the scheduling with reference to the UE capability information from the UE. The UE may inform the gNB whether the UE itself supports a specific function or not, the maximum allowed value of the function supported by the UE, and the like through the UE capability information. Therefore, UE capability information reported to the gNB by each UE may have a different value with regard to each UE.

As an example, the UE may report UE capability information including at least one of the following pieces of control information to the gNB.

- Control information regarding the frequency band supported by the UE
- Control information regarding the channel bandwidth supported by the UE
- Control information regarding the maximum modulation scheme supported by the UE
- Control information regarding the maximum number of beams supported by the UE
- Control information regarding the maximum number of layers supported by the UE
- Control information regarding CSI reporting supported by the UE
- Control information regarding whether the UE supports frequency hopping
- Control information regarding the bandwidth when carrier aggregation (CA) is supported
- Control information regarding whether cross carrier scheduling is supported when CA is supported

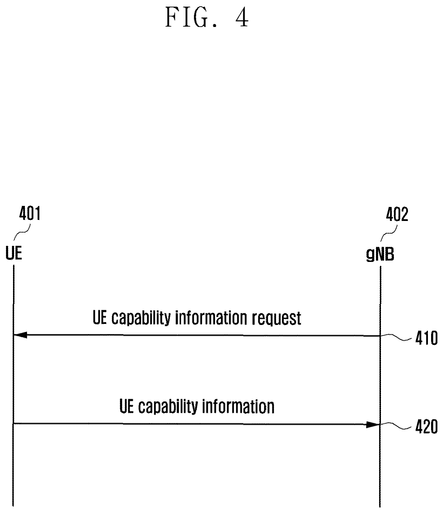

FIG. 4 illustrates a flow of signals used by a UE to report UE capability information to a base station according to various embodiments of the disclosure.

Referring to FIG. 4, in step 410, the base station (gNB) 402 may transmit a UE capability information request message to the UE 401. In step 420, the UE 401 may transmit UE capability information to the gNB, based on the UE

9

capability information request of the gNB 402. According to an embodiment, the UE 401 may transmit UE capability information to the gNB 402 regardless of the UE capability information request of the gNB 402.

Based on the transmission and reception process of UE capability information, the UE connected to the base station may perform one-to-one communication with the base station as a UE in the RRC_CONNECTED state. A UE in the RRC_CONNECTED state may perform the following operations.

- Physical downlink control channel (PDCCH) monitoring
- Radio link monitoring

First, to describe monitoring a downlink control channel of a UE in the RRC_CONNECTED state in detail, if discontinuous reception (DRX) is not configured from the base station, a MAC entity of the UE may continuously monitor the PDCCH. If DRX is configured for the MAC entity of the UE from the base station via an upper signal, the MAC entity of the UE may discontinuously monitor a PDCCH by using DRX operation for all activated serving cells. The UE may receive, from the base station via an upper signaling, DRX operation-related parameters (including, for example, at least one of a DRX cycle, drx-onDurationTimer, drx-InactivityTimer, and drx-SlotOffset), and may discontinuously monitor a PDCCH, based on the parameters. In the disclosure, when a UE in the RRC_CONNECTED state monitors a PDCCH by DRX, the UE may be said to perform a connected-DRX (C-DRX) operation, or may be said to perform C-DRX.

Next, to describe the radio link monitoring of a UE in the RRC_CONNECTED state in detail, a UE performs radio link monitoring for a serving cell (or, in the case where carrier aggregation is configured, a primary serving cell, i.e., Pcell) by using a CSI-RS or an SS/PBCH signal, and the radio link monitoring may be described as measuring the quality of a radio link by using the signals, and determining whether the radio link is in-sync or out-of-sync. A signal between the CSI-RS and the SS/PBCH signal to be used to perform radio link monitoring may be configured by receiving an upper signal from the base station.

To describe an evaluation period for measuring and evaluating whether the link is in-sync or out-of-sync in the case of measuring the quality of the radio link, the in-sync evaluation period and the out-of-sync evaluation period may be different depending on whether the base station has configured DRX for PDCCH monitoring, and the DRX cycle value if DRX is configured. Next, the indication period in which the physical layer of the UE transmits the evaluated in-sync or out-of-sync to the upper layer of the UE as a result of the measurement and evaluation will be described. If DRX is not configured, the indication period is determined as a maximum value between the shortest period of the resource for radio link monitoring and 10 ms. On the contrary, when DRX is configured, the indication period is determined as a maximum value between the shortest period of resources for radio link monitoring and the DRX period.

To describe the in-sync, when the radio link quality is better than a threshold Q_in received from the configuration of the base station for any resources in the resource set for radio link monitoring, the physical layer of the UE transmits in-sync to the upper layer of the UE in the frame in which the radio link quality is evaluated. In order to determine the in-sync of the radio link quality, the UE determines whether the block error rate (BLER) in a case of performing PDCCH decoding from virtual downlink control channel (PDCCH) parameters is smaller than a pre-defined value. The predefined value may be, for example, 2%. The above downlink control channel parameters may be differently determined according to the signal used for radio link monitoring.

To describe the out-of-sync, if the radio link quality is worse than the threshold Q_out received from the configuration of the base station for any resources in the resource set for radio link monitoring, the physical layer of the UE transmits the out-of-sync to the upper layer of the UE in the frame in which the radio link quality is evaluated. In order to determine the out-of-sync of the radio link quality, the UE determines whether the BLER in a case of performing PDCCH decoding from virtual downlink control channel parameters is greater than a pre-defined value. The predefined value may be, for example, 10%. The above downlink control channel parameters may be differently determined according to the signal used for radio link monitoring.

The UE (or the higher layer of the UE) starts a T310 timer after receiving N310 consecutive out-of-sync indications. If the UE has received N311 consecutive in-sync indications, the T310 timer is stopped. Otherwise, the UE declares a radio link failure (RLF) and initiates a T311 timer. The UE performs cell selection in order to find a suitable cell. If the UE is unable to find a suitable cell and the T311 timer expires, the UE transitions to the RRC_IDLE state. When a suitable cell is found, the T311 timer is stopped, and the UE transmits an RRC reestablishment request message to the base station of the cell, and starts the T301 timer. If the RRC reestablishment operation is not successfully completed and the T301 timer expires, the UE transitions to the RRC_IDLE state. In case that the RRC reestablishment operation is successfully completed within the T301 timer, the UE transitions to a normal RRC_CONNECTED state.

Parameters and timers for performing procedures related to radio link monitoring and radio link failure, such as the N310, T310 timer, N311, T311 timer, and T301 timer, may be configured for the UE from the base station via an upper signal.

Contrary to the RRC_CONNECTED state, a UE having no connection may be in an RRC_IDLE state, and the UE in the RRC_IDLE state may perform operations, as follows.

- Perform a UE-specific discontinuous reception (DRX) cycle configured by a higher layer. Performing the DRX cycle by the UE in the RRC_IDLE state may be described as performing an IDLE-DRX (I-DRX) operation or performing I-DRX.
- Receive a paging message from the core network
- Acquire system information
- Perform a measurement operation related to the serving cell (or the cell on which the same is camping) and cell selection/reselection
- A neighboring cell-related measurement operation and cell reselection
- Receive paging early indication (PEI)

To describe the measurement operation related to the serving cell (or the cell being camped on) and the cell selection/reselection in more detail, the UE may measure synchronization signal-reference signal received power (SS-RSRP) and SS-RSRP levels for the serving cell (or the cell being camped on) at least for each M1*N1 DRX cycle, and may evaluate cell selection determination criterion S based on the measured value. Here, if the SSB-based measurement timing configuration (SMTC) cycle is greater than 20ms and the DRX cycle is less than or equal to 0.64s, M1=2, and otherwise, M1=1.

N1 may be determined by Table below.

[Table 4]

| DRX cycle[s] | N1 | | | $N_{serv}$ [number of DRX cycles] |
|---|---|---|---|---|
| | FR1 | FR2-1 | FR2-2 | |
| 0.32 | 1 | 8 | 12 | M1*N1*4 |
| 0.64 | | 5 | 8 | M1*N1*4 |
| 1.28 | | 4 | 6 | N1*2 |
| 2.56 | | 3 | 5 | N1*2 |

The cell selection determination standard S may be satisfied if Srxlev > 0, which corresponds to SS-RSRP, and if Squal > 0, which corresponds to SS-RSRQ.

$$S_{rxlev} = Q_{rxlevmeas} - (Q_{rxlevmin} + Q_{rxlevminoffset}) - P_{compensation} - Q_{offsettemp}$$

$$S_{qual} = Q_{qualmeas} - (Q_{qualmin} + Q_{qualminoffset}) - Q_{offsettemp}$$

Here, $Q_{rxlevmeas}$ may be the measured SS-RSRP, $Q_{qualmeas}$ may be the measured SS-RSRQ, $Q_{rxlevmin}$ may be the minimum level of the magnitude of the reception signal required in the serving cell and may be received by the UE via system information, and $Q_{qualmin}$ may be the minimum level of the quality of the reception signal required in the serving cell and may be received by the UE via system information. Remaining parameters are presented in 3gpp TS 38.304. In determining the measured SS-RSRP, the UE may determine the SS-RSRP of the serving cell by filtering from at least two measurement values spaced by at least half of the DRX cycle. In addition, in determining the measured SS-RSRQ, the UE may determine the SS-RSRQ of the serving cell by filtering from at least two measurement values spaced by at least half of the DRX cycle.

If the UE determines that the serving cell cannot satisfy the cell selection determination standard S during a continuous DRX cycle of Nserv, the UE may initiate measurement of all peripheral cells other than the serving cell. If the UE fails to find a new appropriate cell for 10s, the UE may initiate a cell selection procedure regarding the selected public land mobile network (PLMN).

Next, in connection with receiving a paging message from the core network, the UE may monitor one paging occasion (PO) during a DRX cycle. The PO is a set of PDCCH monitoring occasions, and may be configured by multiple time slots (subframes or OFDM symbols) in which paging control information may be received. A paging frame (PF) is one radio frame (10ms), and may include one or multiple POs or starting points of POs.

The PF and the PO may be determined by the following equations:

The system frame number (SFN) for the PF is determined by (SFN + PF_offset) mod T = (T div N)*(UE_ID mod N), wherein PF_offset refers to an offset for determining the PF, T refers to a DRX cycle, N refers to the number of (cell-common or cell-specific) PFs per DRX cycle and is determined by an upper-level signal (for example, system information), and UE_ID refers to a UE ID (5G-S-TMSI) and is determined by the core network. PFs determined by the N refer to paging frames commonly applied to UEs in the cell, and will be referred to as cell-common PFs in the disclosure.

i_s which indicates a PO index is determined by i_s = floor(UE_ID/N) mod Ns, wherein Ns refers to the number of POs in one PF, and may be determined by an upper-level signal (for example, system information).

As an example, assuming that PF_offset=3, T=128, N=T/4=32, Ns=4, the UE_ID mod 32 of the UE_ID is 1, and the floor (UE_ID/32) mod 4 of the UE_ID is 1, then SFN and i_s may be determined as:

$$(SFN + 3) \bmod 128 = (128 \operatorname{div} 32)*(UE\_ID \bmod 32) = 4*1 = 4,$$

$$i\_s = \mathrm{floor}\ (UE\_ID/32) \bmod 4 = 1.$$

Therefore, the paging frames (PFs) to be received by a UE having the above UE_ID are determined to be radio frames, the SFN of which is 1, 129, 257,..., among cell-common PFs, and the PO may be determined to be the (i_s + 1)th PO among four POs in the PFs.

Next, in connection with receiving a paging early indication (PEI), the PEI has been introduced to reduce power consumed by a UE while monitoring and receiving a paging control channel and a paging data channel in each DRX cycle. The UE may monitor or receive one PEI occasion (PEI-O) before receiving a paging during a DRX cycle. When the UE receives a PEI and the PEI indicates a paging reception sub-group to which the UE belongs, the UE may monitor the associated paging occasion (PO). If the UE fails to detect the PEI during a PEI occasion, or if the PEI does not indicate a paging reception sub-group to which the UE belongs, the UE does not need to monitor the relevant PO, and this may reduce UE power consumption. The UE may determine a PEI occasion, as follows. The PEI occasion is spaced apart backwards by the subframe offset with reference to a radio frame of a reference point which is spaced apart forwards by pei-FrameOffset with reference to the PF including the associated PO, and the UE may monitor the PEI in the PEI occasion determined in the manner above. The pei-FrameOffset, subframe offset, and the like may be determined by an upper-level signal (for example, system information).

In the 5G system, a new UE state referred to as RRC_INACTIVE has been defined to reduce the energy and time consumed for the UE's initial access. The RRC_INACTIVE UE may perform the following operations in addition to operations performed by an RRC_IDLE UE.

- Store access stratum (AS) information necessary for cell access
- A UE-specific DRX cycle operation configured by the RRC layer
- Configure a radio access network (RAN)-based notification area (RNA) which may be used during a handover by the RRC layer, and periodically performing update
- Monitor a RAN-based paging message transmitted through an inactive-radio network temporary identifier (I-RNTI)

The UE in the RRC_CONNECTED state may receive an RRC release indication from the gNB and may change from the RRC_CONNECTED state to an RRC_INACTIVE/RRC_IDLE state.

The UE in the RRC_INACTIVE/RRC_IDLE state may perform a random access, complete the entire random access procedure, and change from the RRC_INACTIVE/RRC_IDLE state to the RRC_CONNECTED state.

Hereinafter, a scheduling method in which the gNB transmits downlink data to the UE, or indicates the UE's uplink data transmission, will be described.

Downlink control information (DCI) may be control information transmitted from the gNB to the UE through the downlink. Downlink control information (DCI) may include downlink data scheduling information or uplink data scheduling information for a predetermined UE. In general, the gNB may independently perform channel coding for each UE with regard to the DCI, and may transmit the same to each UE through a physical downlink control channel (PDCCH).

With regard to a UE to be scheduled, the gNB may apply and operate a predetermined DCI format according to the purpose, such as whether the same is scheduling information regarding downlink data (downlink assignment), whether the same is scheduling information regarding uplink data (uplink grant), or whether the same is DCI for power control.

The gNB may transmit downlink data to the UE through a physical downlink shared channel (PDSCH). Scheduling information such as detailed mapping locations in time and frequency domains of the PDSCH, the modulation scheme, HARQ-related control information, and power control information, may be provided from the gNB to the UE through DCI related to downlink data scheduling information among DCI transmitted through a PDCCH.

The UE may transmit uplink data to the gNB through a physical uplink shared channel (PUSCH). The gNB may inform the UE of scheduling information, such as detailed mapping locations in time and frequency domains of the PUSCH, the modulation scheme, HARQ-related control information, and power control information, through DCI related to uplink data scheduling information among DCI transmitted through a PDCCH.

The time-frequency resource to which the PDCCH is mapped may be referred to as a control resource set (CORESET). The CORESET may be configured for all or part of frequency resources in a bandwidth supported by the UE in the frequency domain. In the time domain, one or multiple OFDM symbols may be configured as a CORESET, and this may be defined as a CORESET duration. A control resource set in the 5G system described above may be configured for a UE by a base station through upper layer signaling (e.g., system information, master information block (MIB), radio resource control (RRC) signaling). The description that the gNB configures a CORESET for the UE may mean that the gNB provides the UE with information such as the CORESET identity, the CORESET's frequency location, and the CORESET's symbol length. Pieces of information provided from the gNB to the UE to configure a CORESET may include at least a part of the information included in [Table 5] below:

[Table 5]

```
ControlResourceSet ::=          SEQUENCE {
    controlResourceSetId            ControlResourceSetId,

    frequencyDomainResources        BIT STRING (SIZE (45)),
    duration                        INTEGER (1..maxCoReSetDuration),
    cce-REG-MappingType             CHOICE {
        interleaved                 SEQUENCE {
            reg-BundleSize              ENUMERATED {n2, n3, n6},
            interleaverSize            ENUMERATED {n2, n3, n6},
            shiftIndex                  INTEGER(0..maxNrofPhysicalResourceBlocks-1)      OPTIONAL --
Need S
        },
        nonInterleaved              NULL
    },
    precoderGranularity             ENUMERATED {sameAsREG-bundle, allContiguousRBs},
    tci-StatesPDCCH-ToAddList       SEQUENCE(SIZE (1..maxNrofTCI-StatesPDCCH)) OF TCI-StateId
OPTIONAL, -- Cond NotSIB1-initialBWP
    tci-StatesPDCCH-ToReleaseList          SEQUENCE(SIZE (1..maxNrofTCI-StatesPDCCH)) OF TCI-
StateId OPTIONAL, -- Cond NotSIB1-initialBWP
    tci-PresentInDCI                ENUMERATED {enabled}                    OPTIONAL, -- Need S
    pdcch-DMRS-ScramblingID         INTEGER (0..65535)                      OPTIONAL, -- Need
S
    ...
}
```

A CORESET may be configured by $N_{RB}^{CORESET}$ RBs in the frequency domain and may be configured by $N_{symb}^{CORESET} \in \{1,2,3\}$ symbols in the time domain. An NR PDCCH may be configured by one or multiple control channel elements (CCEs). One CCE may be configured by six resource element groups (REGs), and each REG may be defined as one RB during one OFDM symbol. In one CORESET, REGs may be indexed in the time-first order, starting from REG index 0 in the CORESET's first CORESET symbol/lowest RB.

As a PDCCH-related transmission method, an interleaved type and a non-interleaved type may be supported. The gNB may configure, for the UE, whether interleaved or non-interleaved transmission is performed with regard to each CORESET through upper layer signaling. Interleaving may be performed at the REG bundle level. The REG bundle may be defined as one REG or a set of multiple REGs. The UE may determine the CCE-to-REG type in the corresponding CORESET, based on the configuration by the gNB regarding whether transmission is of the interleaved type or the non-interleaved type, in a manner as in Table 6 below.

[Table 6]

The CCE-to-REG mapping for a control-resource set can be interleaved or non-interleaved and is described by REG bundles:

- REG bundle $i$ is defined as REGs {$iL$,$iL$-1,...,$iL$-$L$-1} where L is the REG bundle size, $i = 0,1, ..., N_{REG}^{CORESET}/L - 1$ , and $N_{REG}^{CORESET} = N_{RB}^{CORESET} N_{symb}^{CORESET}$ is the number of REGs in the CORESET

- CCE $j$ consists of REG bundles {$f(6j/L)$,$f(6j/L$-1),...,$f(6j/L$-6/$L$-1)} where $f(\cdot)$ is an interleaver

For non-interleaved CCE-to-REG mapping, $L = 6$ and $f(x) = x$.

For interleaved CCE-to-REG mapping, $L \in \{2,6\}$ for $N_{symb}^{CORESET}$ and $L \in \{N_{symb}^{CORESET}, 6\}$ for

$N_{symb}^{CORESET} \in \{2,3\}$ . The interleaver is defined by

$$f(x) = (rC + c + n_{shift}) \bmod (N_{REG}^{CORESET}/L)$$
$$x = cR + r$$
$$r = 0,1, ..., R - 1$$
$$c = 0,1, ..., C - 1$$
$$C = N_{REG}^{CORESET}/(LR)$$

where $R \in \{2,3,6\}$.

The gNB may provide the UE with configuration information regarding the symbol to which the PDCCH is mapped in the slot, the transmission period, and the like through signaling.

A description of a search space for a PDCCH is as follows. The number of CCEs necessary to transmit a PDCCH may be 1, 2, 4, 8, or 16 according to aggregation levels (ALs), and different number of CCEs may be used to implement link adaption of a downlink control channel. For example, in the case of AL=L, one downlink control channel may be transmitted through L CCEs. The UE performs blind decoding for detecting a signal while being no information regarding the downlink control channel, and to this end, a search space indicating a set of CCEs may be defined. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

The search spaces may be classified into common search spaces (CSSs) and UE-specific search spaces (USSs). A group of UEs or all UEs may search a common search space of the PDCCH in order to receive cell-common control information such as dynamic scheduling regarding system information or a paging message. For example, the UE may receive PDSCH scheduling allocation information for reception of system information by searching the common search space for the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space for the PDCCH. The UE-specific search space may be defined UE-specifically as a function of various system parameters and the identity (ID) of the UE.

Configuration information of the search space for the PDCCH may be configured for the UE by the base station through upper layer signaling (e.g., SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set (CORESET) index for monitoring the search space, and the like. For example, parameters of the search space for the PDCCH may include the following pieces of information given in Table 7 below.

[Table 7]

```
SearchSpace ::=                 SEQUENCE {
    searchSpaceId               SearchSpaceId,
    controlResourceSetId        ControlResourceSetId              OPTIONAL,  -- Cond
SetupOnly
    monitoringSlotPeriodicityAndOffset   CHOICE {
        sl1             NULL,
        sl2             INTEGER  (0..1),
        sl4             INTEGER  (0..3),
        sl5             INTEGER  (0..4),
        sl8             INTEGER  (0..7),
        sl10            INTEGER  (0..9),
        sl16            INTEGER  (0..15),
        sl20            INTEGER  (0..19),
        sl40            INTEGER  (0..39),
        sl80            INTEGER  (0..79),
        sl160           INTEGER  (0..159),
        sl320           INTEGER  (0..319),
        sl640           INTEGER  (0..639),
        sl1280          INTEGER  (0..1279),
        sl2560          INTEGER  (0..2559)
    }                                            OPTIONAL,  -- Cond Setup
    duration            INTEGER  (2..2559)            OPTIONAL,  -- Need S
    monitoringSymbolsWithinSlot     BIT STRING (SIZE (14))              OPTIONAL,  --
Cond Setup
    nrofCandidates              SEQUENCE {
        aggregationLevel1           ENUMERATED {n0, n1, n2, n3, n4, n5, n6, n8},
        aggregationLevel2           ENUMERATED {n0, n1, n2, n3, n4, n5, n6, n8},
        aggregationLevel4           ENUMERATED {n0, n1, n2, n3, n4, n5, n6, n8},
        aggregationLevel8           ENUMERATED {n0, n1, n2, n3, n4, n5, n6, n8},
        aggregationLevel16          ENUMERATED {n0, n1, n2, n3, n4, n5, n6, n8}
    }                                            OPTIONAL,  -- Cond Setup
    searchSpaceType             CHOICE {
        common                  SEQUENCE {
            dci-Format0-0-AndFormat1-0          SEQUENCE {
                ...
            }                                    OPTIONAL,  -- Need R
            dci-Format2-0               SEQUENCE {
                nrofCandidates-SFI              SEQUENCE {
                    aggregationLevel1               ENUMERATED {n1, n2}            OPTIONAL,  --
Need R
                    aggregationLevel2               ENUMERATED {n1, n2}            OPTIONAL,  --
Need R
```

```
                    aggregationLevel4          ENUMERATED {n1, n2}              OPTIONAL,  --
        Need R
                    aggregationLevel8          ENUMERATED {n1, n2}              OPTIONAL,  --
        Need R
                    aggregationLevel16         ENUMERATED {n1, n2}              OPTIONAL   --
        Need R
                },
                ...
                }                                                   OPTIONAL,  -- Need R
            dci-Format2-1          SEQUENCE {
                ...
                }                                                   OPTIONAL,  -- Need R
            dci-Format2-2          SEQUENCE {
                ...
                }                                                   OPTIONAL,  -- Need R
            dci-Format2-3          SEQUENCE {
                dummy1                         ENUMERATED {sl1, sl2, sl4, sl5, sl8, sl10, sl16, sl20}
        OPTIONAL,  -- Cond Setup
                dummy2             ENUMERATED {n1, n2},
                ...
                }                                                   OPTIONAL   -- Need R
            },
            ue-Specific           SEQUENCE {
                dci-Formats                    ENUMERATED {formats0-0-And-1-0, formats0-1-And-1-1},
                ...
            }
            }                                                       OPTIONAL   -- Cond Setup
        }
```

Based on configuration information, the base station may configure one or multiple search space sets for the UE. According to an embodiment, the base station may configure search space set 1 and search space set 2 for the UE. In search space set 1, the UE may be configured to monitor DCI format A scrambled by an X-RNTI in a common search space, and in search space set 3, the UE may be configured to monitor DCI format B scrambled by a Y-RNTI in a UE-specific search space.

According to the configuration information transmitted by the base station, a common search space or a UE-specific search space may include one or multiple search space sets. For example, search space set #1 and search space set #2 may be configured as a common search space, and search space set #3 and search space set #4 may be configured as a UE-specific search space.

In a common search space, the UE may monitor combinations of DCI formats and RNTIs given below. According to various embodiments of the disclosure, those combinations described above are not limited to examples below.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In a UE-specific search space, the UE may monitor combinations of DCI formats and RNTIs given below. According to various embodiments of the disclosure, those combinations described above are not limited to examples below.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs may follow the definition and usage given below. According to various embodiments of the disclosure, those definitions and usages described above are not limited to examples below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI(RA-RNTI): used to schedule a PDSCH in a random access step
- Paging RNTI (P-RNTI): used to schedule a PDSCH in which paging is transmitted
- System information RNTI (SI-RNTI): used to schedule a PDSCH in which system information is transmitted
- Interruption RNTI(INT-RNTI): used to indicate whether a PDSCH is punctured
- Transmit power control for PUSCH RNTI (TPC-PUSCH-RNTI): used to indicate a power control command regarding a PUSCH
- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

The DCI formats enumerated above may follow the definitions given in Table 8 below.

[Table 8]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

The search space at aggregation level L in connection with CORESET p and search space set s may be expressed by the following equation.

[Equation 1]

$$ L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i $$

- $L$: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, ..., M_{s,max}^{(L)} -1$ : PDCCH candidate index at aggregation level L
- $i$ = 0, ..., $L$ -1
- $Y_{p,n_{s,f}^{\mu}} = \left( A_p \cdot Y_{p,n_{s,f}^{\mu}-1} \right) \bmod D$ , $Y_{p,-1} = n_{RNTI} \neq 0$, $A_p = 39827$ for p mod 3 = 0, $A_p = 39829$ for p mod 3 = 1, $A_p$ =

39839 *for pmod*3 = 2, *D* = 65537

- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

As described above, signal transmission/reception in ultrawide bandwidths ranging from tens or hundreds of MHz or multiple GHz may be supported to accomplish an ultrahigh-speed data service at multiple Gbps in 5G systems. Ultra-wide bandwidth signal transmission and reception may be supported through a single component carrier (CC), or through carrier aggregation (CA) technology that combines multiple CCs. If the mobile communication operator fails to secure frequencies in a bandwidth enough to provide a super-fast data service by using a single CC, the CA technology combines respective CCs having a relatively small bandwidth size such that the total sum of frequency bandwidths is increased, consequently enabling a super-fast data service.

5G systems are designed and developed in consideration of all of various use cases. Besides the standby time, reliability, and availability, the UE's energy efficiency is critical in 5G systems. 5G UEs need to be charged on a weekly or daily basis according to the individuals' time of use. In general, 5G UEs consume tens of mW in RRC_IDLE/RRC_INACTIVE states, and consume hundreds of mW in RRC_CONNECTED states. Design for extending the battery life may be an indispensable element not only for better user experiences, but also for improved energy efficiency. Energy efficiency may be more important to UEs having no continuous energy supply (for example, UEs using small rechargeable and single coin cell batteries). Among 5G use cases, sensors and actuators are deployed for monitoring, measurement, charging, and the like on a wide scale. In general, batteries for sensors or actuators cannot be recharged, and are expected to last at least a number of years. In addition, wearable devices such as smartwatches, rings, eHealth-related devices, and medical monitoring devices can hardly last a maximum of 1-2 weeks, depending on the time of use.

According to an embodiment, a 5G UE's power consumption depends on the configured length (for example, the paging cycle) of wakeup periods, and an extended discontinuous reception (eDRX) cycle having a large value may be used to satisfy battery lifetime requirements. However, the eDRX scheme maintains a long battery lifetime on the basis of a long standby time, and thus is inappropriate for a service having a short standby time. For example, in the case of use for fire sensing and extinguishing, it is within 1-2 seconds from the time point at which a fire is detected by a sensor that fire shutters need to be closed, and sprinklers need to be activated by actuators. In this case, the standby time may be critical, and a long eDRX cycle as in existing cases cannot satisfy latency requirements, and may thus be inappropriate for such a case.

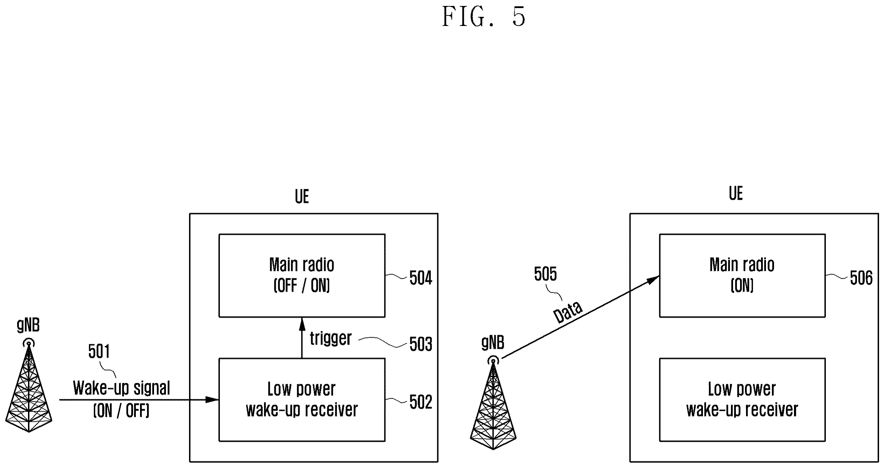

FIG. 5 illustrates an example of state transitions of a base station and a UE according to various embodiments of the disclosure, and the state of the UE according to the base station state. Specifically, FIG. 5 illustrates state transitions of a base station (gNB) and a UE for solving the above-described problems.

According to an embodiment, a 5G UE may need to periodically wake up once per eDRX cycle, and this may dominate power consumption during a period of time having no signaling or data traffic. Power consumption could be substantially reduced if the UE could wake up only when triggered (for example, through paging). Substantial reduction in power consumption may be accomplished by a method, as in FIG. 5, wherein the main radio (MR) (for example, existing NR radio) is triggered by using a wake-up signal (WUS), and the main radio is turned on only when data transmission/reception is necessary by using a wake-up receiver (WUR) (or low power wake-up receiver (LP-WUR) (LR)) which is a separate receiver capable of monitoring the WUS with super-low power.

According to an embodiment of the disclosure, in step 501, the gNB may transmit a WUS corresponding to ON or OFF to the UE. According to an embodiment, before step 501, the gNB may periodically transmit a WUR-dedicated synchronization signal (as used herein, named a low power-synchronization signal (LP-SS) or a new synchronization signal, but this name is only for the sake of illustration and the scope of the disclosure is not limited thereby), so as to allow the UE to make time or frequency synchronization in the WUR when receiving the WUS.

In step 502, the UE may receive a WUS by using the WUR. According to an embodiment, the UE may make time or frequency synchronization of the WUR by receiving a WUR-dedicated synchronization signal or legacy synchronization signal such that time or frequency synchronization of the WUR can be made before receiving the WUS.

In step 503, the UE may trigger the main radio, which is in an OFF or ON state, based on information indicating that the received signal corresponds to ON or OFF.

In step 504, the UE may wake up the main radio or may configure a power off state. According to an embodiment, instead of a fully OFF state, a deep sleep (DS) or ultra-deep sleep (UDS) state may also be configured.

In step 505, if data traffic to be transmitted from the gNB to the UE has occurred, and if the WUS transmitted by the gNB in step 501 is a signal corresponding to ON, the main radio may be turned on in step 506, and the UE may receive data transmitted by the gNB through the main radio (not the WUR).

Hereinafter, a procedure for waking up the main radio in case that the main radio is in a sleep state will be described. According to an embodiment, the operation of waking up the main radio may be performed in combination with various operations according to various embodiments of the disclosure or performed separately, and may not be a necessary component.

According to various embodiments of the disclosure, the gNB may transmit a wake-up signal to a UE if there is a channel or signal to be transmitted to the UE. The UE or wake-up receiver may receive the wake-up signal and turn on the main radio. According to an embodiment, the wake-up signal receiving operation itself may be an instruction to wake up the main radio. According to an embodiment, the wake-up signal may include K information bits, and information indicating to wake up the main radio may be mapped to the K information bits. For example, if an information bit included in the wake-up signal is 1 bit of information, "1" may indicate ON, and "0" may indicate OFF.

According to an embodiment, from the viewpoint of gNB transmission, it may be predefined at which time point a wake-up signal will be transmitted prior to transmission of a channel or signal. In terms of UE reception, it may be predefined at which time point the wake-up signal may be received prior to reception of a channel or signal.

According to an embodiment, the UE may transmit information regarding a time offset necessary between transmission of the wake-up signal and transmission of the channel/signal to the gNB, and the gNB may configure the time offset between transmission of the wake-up signal and transmission of the channel/signal for the UE, based on the received information. According to an embodiment, the UE may transmit information regarding a time offset necessary between transmission of the wake-up signal and transmission of the channel/signal to the gNB through a UE capability information reporting procedure, or may transmit the same to the gNB through a random access preamble in a random access procedure, or through an uplink data channel. Obviously, this is not limitative, and the UE may transmit information regarding a time offset to the gNB through an upper-level signal, or through various signals. The gNB may configure information regarding the time offset between transmission of the wake-up signal and transmission of the channel/signal for the UE through a random access response (for example, message 2) in a random access procedure or through a downlink data channel of random access contention resolution (for example, message 4). Obviously, this is not limitative, and the gNB may configure information regarding the time offset for the UE by an upper-level signal or through various signals.

According to various embodiments of the disclosure, in case that the gNB has a periodic channel or a periodic signal to be transmitted to the UE, the UE or wake-up receiver may turn on the main radio according to a period that follows configuration information of a periodic channel or a periodic signal configured by the gNB, instead of an operation in which the gNB transmits a wake-up signal each time there is a channel or signal to be transmitted.

According to an embodiment, the gNB may transmit a wake-up signal only during the first transmission of a periodic channel or a periodic signal, and may omit wake-up signal transmission when the channel or signal is later transmitted repeatedly. In this case, the UE or wake-up receiver may turn on the main radio, based on the period that follows the configuration information of a periodic channel or a periodic signal configured by the gNB.

According to an embodiment, the type of the periodic channel or periodic signal transmitted/received by the gNB and the UE may be predefined. According to an embodiment, the type of the periodic channel or periodic signal may be configured by the gNB. The gNB may configure the type of the periodic channel or periodic signal for the UE through a random access response (for example, message 2) or through a downlink data channel of random access contention resolution (for example, message 4), or may configure the same for the UE through an upper-level signal indicating configuration information for wake-up signal reception or through another upper-level signal.

According to various embodiments of the disclosure, in case that the UE has a channel or signal (for example, physical random access channel (PRACH) or scheduling request (SR) or buffer status report (BSR)) to be transmitted to the gNB, or in case that the UE performs L1/L3-based measurement, the UE or wake-up receiver may turn on the main radio regardless of the wake-up signal transmitted by the gNB.

According to an embodiment, with regard to uplink transmission from the UE to the gNB or L1/L3-based measurement, the operation in which the wake-up receiver receives a wake-up signal and turn on and off the UE's main radio may not be applied.

According to an embodiment, the type of the uplink channel or uplink signal transmitted by the UE regardless of the wake-up signal receiving operation, or the L1/L3-based measurement may be predefined. According to an embodiment, the type of the uplink channel or uplink signal or the L1/L3-based measurement may be configured by the gNB. The gNB may configure the type of the uplink channel or uplink signal or the L1/L3-based measurement for the UE through a random access response (for example, message 2) or through a random access contention resolution (for example, message 4) downlink data channel, or may configure the same for the UE through an upper-level signal indicating configuration information for wake-up signal reception or through another upper-level signal.

Hereinafter, according to various embodiments of the disclosure, an operation for turning off the main radio, in case that the main radio is in an ON state, will be described. According to an embodiment, the operation of waking up the main radio in case that the main radio is in an ON state, may be performed in combination with various operations according to various embodiments of the disclosure or performed separately, and may not be a necessary component.

According to various embodiments of the disclosure, the gNB may transmit a sleep signal to a UE if there is no channel or signal to be transmitted to the UE. The UE or wake-up receiver may receive the sleep signal and turn off the main radio. According to an embodiment, the sleep signal receiving operation itself may be an instruction to make the main radio sleep. According to an embodiment, the sleep signal may be configured as a sequence separate from the wake-up signal. According to an embodiment, the sleep signal may include information mapped to information corresponding to an instruction to make the main radio sleep among K information bits included in the wake-up signal. For example, in the case of 1 bit of information, "0" may indicate OFF and "1" may indicate ON.

According to various embodiments of the disclosure, the UE's main radio may be turned off if a configured condition is satisfied. According to an embodiment, the condition configured for the main radio may correspond to a case in which the main radio fails to detect or decode a downlink control channel, or a specific channel or signal during a configured range. According to an embodiment, the gNB may configure configuration information (for example, information including a range and a specific channel or signal) used by the UE to determine to turn off the main radio for the UE through an upper-level signal indicating configuration information for wake-up signal reception or through another upper-level signal.

According to various embodiments of the disclosure, the UE's main radio may always be turned off after receiving one channel or signal. According to an embodiment, the main radio may be turned off after the wake-up receiver has received a wake-up signal from the gNB, thereby turning on the main radio such that channels or signals are received. According to an embodiment, the time necessary for the main radio to be turned off after completion of channel or reception may be predefined. According to an embodiment, the UE may transmit information regarding the time necessary for the main radio to be turned off to the gNB, and the gNB may configure the necessary time for the UE, based on the received information. According to an embodiment, the information regarding the necessary time transmitted by the UE may be transmitted to the gNB through a UE capability information reporting procedure. According to an embodiment, the information regarding the necessary time transmitted by the UE may transmitted to the gNB through a random access preamble or uplink data channel. Obviously, this is not limitative, and the UE may transmit the information regarding the necessary time to the gNB through an upper-level signal. The gNB may configure information regarding the time necessary for transmission for the UE through a random access response (for example, message 2) or through a downlink data channel of random access contention resolution (for example, message 4). Obviously, this is not limitative, and the gNB may configure the information regarding the necessary time for the UE through an upper-level signal.

Hereinafter, according to various embodiments of the disclosure, in case that the UE or the UE's main radio is in an RRC_CONNECTED state, connected mode DRX (C-DRX) may be configured for the UE such that the main radio wakes up at each DRX cycle and performs PDCCH reception. According to an embodiment, in case that the UE or the UE's main radio is in an RRC_CONNECTED state, the UE (or main radio) may be configured to receive a signal indicating whether or not the UE needs to receive a PDCCH at the next DRX cycle.

According to an embodiment, in case that the main radio is in an RRC_IDLE/RRC_INACTIVE state, idle mode DRX (I-DRX) may be configured for the UE such that the main radio wakes up at each paging cycle and receives a paging PDCCH. According to an embodiment, in case that the main radio is in an RRC_CONNECTED state, the UE (or main radio) may be configured to receive a signal indicating whether or not the UE needs to receive a paging PDCCH at the next paging cycle.

Hereinafter, according to various embodiments of the disclosure, in case that an operation of indicating ON/OFF based on reception of a wake-up signal by a wake-up receiver and a main radio and an operation that follows a C-DRX or I-DRX configuration coexist, an embodiment regarding a procedure of a UE that operates by the wake-up receiver will be provided. According to an embodiment, the operation of the UE or the UE's main radio related to RRC CONNECTED/IDLE/INACTIVE states may be performed in combination with various operations according to various embodiments of the disclosure or performed separately, and may not be a necessary component.

According to various embodiments of the disclosure, in case that a UE having a wake-up receiver performs operations of receiving a wake-up signal and turning on and off the UE's main radio, the UE may not perform a configuration of C-DRX or I-DRX and an operation that follows the configuration. In this case, instead of performing a configuration of C-DRX or I-DRX and an operation that follows the configuration, the UE may wake up the UE's main radio only upon receiving a wake-up signal that instructs the same to wake up the main radio, and may receive a physical downlink control channel (PDCCH) and a physical downlink shared channel (PDSCH) defined or configured to be received in C-DRX or I-DRX, respectively.

According to an embodiment, in case that the UE or the UE's main radio is in an RRC_CONNECTED state, and in case that the wake-up receiver performs an operation configured or activated by the gNB, the UE may turn on the main radio in case that the wake-up receiver has received a wake-up signal instructing the same to wake up the main radio, and may perform an operation regarding C-DRX configured by the gNB (for example, the main radio receives a PDCH within drx_onDurationTimer at each DRX cycle). According to an embodiment, the UE (or main radio) may not perform an operation configured to receive a signal (for example, DCI format 2_6) indicating whether or not the UE has to receive a PDCCH at the next DRX cycle. According to an embodiment, in case that the UE or the UE's main radio is in an RRC_IDLE/INACTIVE state, and in case that the wake-up receiver performs an operation configured or activated by the gNB, the UE may turn on the main radio in case that the wake-up receiver has received a wake-up signal instructing the same to wake up the main radio, and may perform an operation regarding I-DRX configured by the gNB (for example, the main radio wakes up at each paging cycle and receives a paging PDCCH). According to an embodiment, the UE (or main radio) may not perform an operation configured to receive a signal (for example, DCI format 2_7) indicating whether or not the UE has to receive a paging PDCCH at the next paging cycle.

According to an embodiment, instead of the operation according to the configuration regarding C-DRX or I-DRX, the UE may perform an operation for waking up the main radio according to the wake-up receiver and wake-up signal according to various embodiments of the disclosure and an operation for turning off the main radio. If the wake-up receiver performs an operation deactivated by the gNB, operations regarding the C-DRX or I-DRX configured by the gNB may be performed again.

According to various embodiments of the disclosure, in case that the UE's wake-up receiver performs an operation configured or activated by the gNB, and in case that the UE or wake-up receiver has received a wake-up signal such that the main radio is turned on, the UE may transition to an RRC_CONNECTED state or to an RRC_IDLE or RRC_INACTIVE state. According to an embodiment, it may be predetermined to which state the UE may transition, or may be determined by an upper-level signal regarding the wake-up receiver operation configuration from the gNB, or by a separate upper-level signal.

According to an embodiment, as an example of the case in which information regarding the UE's transition is predetermined, the main radio's state may follow the state immediately before the main radio is turned on and off at the last time immediately before the same is currently turned on. According to an embodiment, as another example of the case in which information regarding the UE's transition is predetermined, the main radio's state may be unaffected by the wake-up receiver operation configuration and activation/deactivation. For example, the main radio's state may be determined only by an upper-level signal indicating at least one of RRC_CONNECTED, RRC_IDLE, or RRC_INACTIVE, and the UE may determine that the main radio's state has not been changed by the wake-up receiver operation configuration and activation/deactivation.

According to an embodiment, the wake-up signal may include K information bits, and information regarding to which of the RRC_CONNECTED state, RRC_IDLE state, and RRC_INACTIVE state the main radio is supposed to transition may be mapped to the K information bits.

According to an embodiment, in case that the UE or the UE's main radio is in the RRC_CONNECTED state, based on the determined state of the UE, the main radio may wake up at each DRX cycle by means of C-DRX configured by the gNB, thereby receiving a PDCCH, or the UE (or main radio) may be configured by the gNB to receive a signal indicating whether or not the UE has to receive a PDCCH at the next DRX cycle. According to an embodiment, in case that an operation for turning off the main radio according to various embodiments is performed while the UE is receiving a PDCCH (for example, in a PDCCH receiving range), the UE may preferentially perform a procedure for turning off the main radio.

According to an embodiment, in case that the UE or the UE's main radio is in an RRC_IDLE/INACTIVE state, the main radio may wake up at each paging cycle by means of I-DRX configured by the gNB, thereby receiving a paging PDCCH. The UE (or main radio) may be configured by the gNB so as to receive a signal indicating whether or not the UE has to receive a paging PDCCH at the next paging cycle. In case that an operation for turning off the main radio according to various embodiments is performed while the UE is receiving a paging PDCCH (for example, in a paging PDCCH receiving range), the UE may preferentially perform a procedure for turning off the main radio.

According to various embodiments of the disclosure, operations of the UE (or main radio) described above may be performed regardless of the order, and the entity that performs the operations may obviously be either the UE or the main radio.

According to an embodiment of the disclosure, power consumed to monitor the WUS depends on the WUS design and hardware modules of the WUR used to detect and process signals, and it is thus expected that the gain will be maximized with regard to devices which are sensitive to power and have small form factors, including wearable devices, and IoT use cases (such as industrial sensors and controllers).

According to an embodiment of the disclosure, a UE including a wake-up receiver may report to the gNB that the UE is capable of waking up the main radio by using the wake-up receiver, or may report capability information to the gNB to indicate that the UE includes a wake-up receiver.

According to an embodiment of the disclosure, the UE may report capability information regarding the wake-up receiver to the gNB through the UE capability report procedure in FIG. 4.

According to an embodiment of the disclosure, the UE may report capability information regarding the wake-up receiver to the gNB through a step of at least one of the random access preamble or the uplink data channel in the random access procedure in FIG. 3. According to an embodiment, sets of random access preambles which may be transmitted by the UE including a wake-up receiver may be transmitted to the UE as system information. The UE may select a random access preamble from the sets received by the UE, and may transmit the random access preamble in step 310 of the random access procedure in FIG. 3, based on the selected random access preamble. According to an embodiment, after reporting capability information regarding the wake-up receiver to the gNB, the UE may receive information indicating whether or not to use the wake-up receiver from the gNB through upper layer signaling or physical signal.

According to an embodiment of the disclosure, in case that the gNB supports the UE including a wake-up receiver (for example, in case that the gNB has hardware capable of transmitting a wake-up signal), the gNB may determine whether or not to use the wake-up receiver after receiving capability information regarding the wake-up receiver from the UE. According to an embodiment, the gNB may transmit a signal indicating configuration information regarding whether or not to use the wake-up receiver, or for receiving a wake-up signal, to the UE. According to an embodiment, the gNB may transmit, to the UE, at least one of indication information indicating reception of a wake-up signal by the UE or activation of the wake-up receiver, or indication information indicating transmission of a wake-up signal by the gNB. The UE may turn off the main radio after a slot configured by the gNB (or defined by specifications), from a slot in which a signal is received, and may turn on the wake-up receiver for monitoring the wake-up signal. According to an embodiment, the UE may transmit at least one of feedback indicating reception of a signal indicating whether or not to use the wake-up receiver before turning off the main radio, or feedback indicating that the main radio is turned off, and the wake-up receiver is turned on, to the gNB.

According to an embodiment, in case that the gNB does not support a UE having a wake-up receiver, the gNB may receive capability information regarding the wake-up receiver from the UE and then transmit a signal to the UE to indicate that the wake-up receiver cannot be used. The UE may transmit feedback to the gNB to indicate reception of the signal indicating that the wake-up receiver cannot be used. According to an embodiment, by using an existing power saving method (for example, C-DRX or I-DRX such as paging), the UE may perform operations by means of parameters of the existing power saving method configured by the gNB.

According to various embodiments of the disclosure, after reporting the capability of a UE having a wake-up receiver and after a procedure regarding whether the gNB supports (or allows) the wake-up receiver, the UE's wake-up receiver may receive a wake-up signal and may perform operations of turning on and off the UE's main radio. According to an embodiment, it is obvious that the UE may perform an operation of turning on/off the main radio and an operation of reporting the capability of the UE having a wake-up receiver, or operation procedures regarding whether the gNB supports the wake-up receiver regardless of each other. For example, even if the UE's capability reporting operation and allowing procedure have not been performed, the gNB may transmit a signal to the UE to indicate configuration information for receiving a wake-up signal, or regarding whether or not to use the wake-up receiver (or indicating activation/deactivation thereof). Accordingly, among UEs that receive signals from the gNB, a UE having a wake-up receiver may turn on/off the main radio through the wake-up receiver.

According to an embodiment, after the UE's capability reporting operation and the gNB's granting procedure are performed, the operation of turning on/off the main radio through the wake-up receiver may be applied to all UEs (e.g., RRC_CONNECTED UEs, RRC_IDLE/RRC_INACTIVE UEs, or UEs accessing the cell (e.g., RRC_CONNECTED UEs)) in the cell supported by the gNB. In case that the UE's capability reporting operation and the gNB's granting procedure are not performed, the operation of turning on/off the main radio through the wake-up receiver may be applied to an RRC_IDLE/RRC_INACTIVE UE which camps in the cell supported by the gNB.

According to an embodiment of the disclosure, an RRC_CONNECTED UE or an RRC_IDLE/RRC_INACTIVE UE which camps in the cell supported by the gNB may measure a new synchronization signal or existing synchronization signal through the wake-up receiver, may compare the measurement value with a reference value configured by an upper-level signal from the gNB, and may determine not to operate the wake-up receiver if the measurement value is smaller than the reference value. The UE may determine to operate the wake-up receiver if the measurement value is larger than the reference value.

In addition, various embodiments of the disclosure may include at least one from among all of various operations of a UE including a wake-up receiver and a gNB disclosed hereinafter, parts thereof, or a combination of parts thereof.

Hereinafter, operations in which a UE having a wake-up receiver turns on and off the UE's main radio according to various embodiments of the disclosure will be described. Various embodiments of the disclosure may include at least one from among all of various operations of a UE including a wake-up receiver and a gNB disclosed hereinafter, parts thereof, or a combination of parts thereof.

According to an embodiment, when a main radio of a UE is on, the UE may receive a downlink signal (or data) from a base station via the main radio. According to various embodiments of the disclosure, the main radio being "on" may be expressed as the main radio being "turned on", "activated", or the like, but is not limited thereto, and may also be represented by expressions having similar or substantially equivalent meanings. According to an embodiment, the description that the main radio is activated may mean that the UE or main radio's specific components (for example, radio frequency (RF), baseband (BB), or the like) are turned on or activated, or may be defined by specifications (for example, 3GPP TS documents). However, according to various embodiments of the disclosure, without being limited to the above descriptions, the description that the main radio is activated may include parameters equivalent or substantially similar thereto, or operations performed by such parameters.

Alternatively, activation of the main radio may include the main radio performing a reception operation of a specific channel or signal (e.g., an SS/PBCH block including a synchronization signal or a PDCCH including a downlink control channel) defined in the 3GPP TS document.

According to an embodiment, when the main radio of the UE is off, the UE may be considered to be in a sleep section or may not receive a downlink signal (or data) from the base station. According to various embodiments of the disclosure, the main radio being "off" may be expressed as the main radio being "turned off", "deactivated", or the like, but is not limited thereto, and may also be represented by expressions having similar or substantially equivalent meanings. According to an embodiment, the description that the main radio is deactivated may mean that the UE or main radio's specific components (for example, radio frequency (RF), baseband (BB), or the like) are turned off or deactivated, or may be defined by specifications (for example, 3GPP TS documents). However, according to various embodiments of the disclosure, without being limited to the above descriptions, the description that the main radio is deactivated may include parameters equivalent or substantially similar thereto, or operations performed by such parameters. Alternatively, deactivation of the main radio may include the main radio no longer performing a reception operation of a specific channel or signal (e.g., an SS/PBCH block including a synchronization signal or a PDCCH including a downlink control channel) defined in the 3GPP TS document.

As described above, in order to reduce power consumption, the main radio may be triggered on through the wake-up receiver only when the UE has received a wake-up signal from the gNB, thereby enabling the main radio to receive a downlink signal from the gNB, and the main radio may be turned off if no wake-up signal is received. The disclosure may propose UE operations required for radio link monitoring when the main radio is maintained in a situation where the UE in the RRC_CONNECTED state is configured to receive the WUS through the WUR. Specifically, the disclosure defines operations of a main radio and a WUR for radio link monitoring, and proposes a method and an apparatus for operating the main radio and the WUR, based on the result of determining the radio link.

In the following description of embodiments, operations or procedures described as being performed by the main radio or wake-up receiver with regard to a UE having a wake-up receiver (for example, a UE capable of receiving a wake-up signal) may also be understood as being performed by a UE having a wake-up receiver (for example, a UE capable of receiving a wake-up signal). Hereinafter, in the disclosure, a downlink signal may include control information (for example, DCI) and/or data transmitted from a gNB to a UE. For example, a downlink signal may refer to a channel (for example, PDCCH/PDSCH) for transmitting control information and/or data. Obviously, the example given above is not limiting.

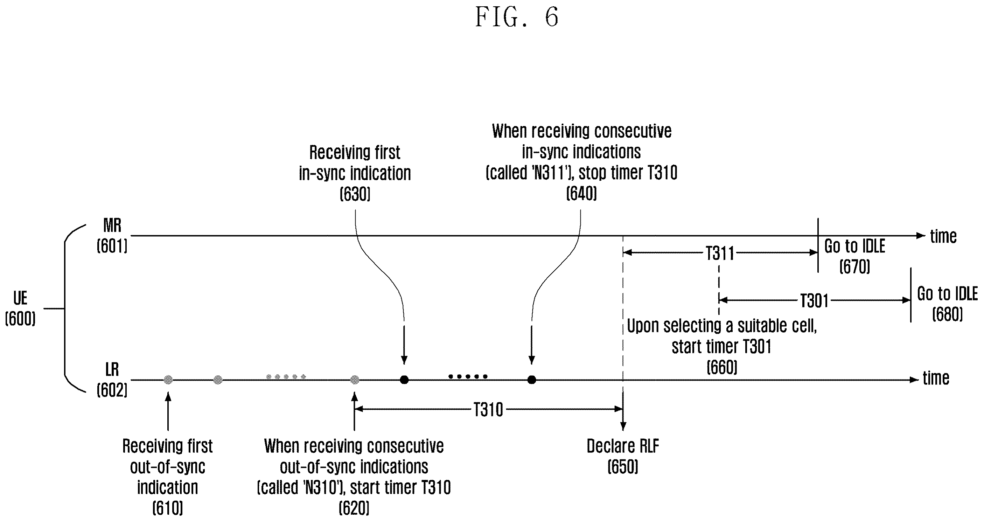

FIG. 6 illustrates an example of a radio link monitoring scheme of a UE having a wake-up receiver according to various embodiments of the disclosure.

A scheme in which a UE having a wake-up receiver performs radio link monitoring in a case in which the wake-up receiver is configured and operated is described with reference to FIG. 6.

Referring to FIG. 6, a UE 600 in FIG. 6 includes a main radio 601 (for example, MR) and a wake-up receiver 602 (for example, LR). The main radio 601 may be configured to be in the RRC_CONNECTED state, from the base station via an upper signal, and a situation in which C-DRX is configured or not configured via the upper signal may be considered.

A scheme in which the wake-up receiver 602 performs radio link monitoring instead of the main radio 601 will first be described.

In an embodiment, in case that the wake-up receiver 602 is activated to be configured and operated, the main radio 601 may no longer perform radio link monitoring. Alternatively, in case that the wake-up receiver 602 is configured and activated, the main radio 601 may not perform radio link monitoring only when the wake-up receiver 602 is on or the main radio 601 is off. Instead of the main radio 601, the wake-up receiver 602 may perform radio link monitoring, and in this case, parameters for radio link monitoring configured for the main radio 601 may no longer be valid. That is, parameters and timers for the main radio 601 including N310, N311, T310, T311, T301, etc., may not be used for radio link monitoring of the wake-up receiver 602. In addition, the number of in-sync indications, out-of-sync indications, and the like determined before the wake-up receiver 602 is activated to be configured and operated may no longer be valid and may not be used for the radio link monitoring of the wake-up receiver 602. Therefore, the parameters and timers for the wake-up receiver 602 may be configured via an upper signal. For example, at least one of the parameters WUS_N310, WUS_N311, WUS_T310, WUS_T311, and WUS_T301 may be configured for radio link monitoring of the wake-up receiver 602, and the wake-up receiver 602 may perform radio link monitoring by using the configured parameter.

In an embodiment, parameters for radio link monitoring configured for the main radio 601 may be continuously used in the wake-up receiver 602. That is, parameters and timers for the main radio 601, which include N310, N311, T310, T311, T301, etc., may be continuously used for radio link monitoring of the wake-up receiver 602. In addition, the number of in-sync indications, out-of-sync indications, etc. determined before the wake-up receiver 602 is activated to be configured and operated may be valid and used for radio link monitoring of the wake-up receiver 602.

In an embodiment, virtual downlink control channel parameters for determining in-sync or out-of-sync during radio link monitoring in the wake-up receiver 602 may be determined to use a different value from a parameter for radio link monitoring in the main radio 601. Alternatively, the BLER for determining in-sync or out-of-sync in the wake-up receiver 602 may be determined to be a value different from the BLER for radio link monitoring in the main radio 601. In addition, the signal for performing radio link monitoring in the wake-up receiver 602 may be determined to use a signal different from that of the main radio 601. For example, the determination may be made to use a new synchronization signal for aligning the time and frequency synchronization of the wake-up receiver 602, or to use an existing SS/PBCH block.

In an embodiment, the in-sync or out-of-sync determined by the wake-up receiver 602 may be transmitted to the upper layer of the wake-up receiver.

In an embodiment, the upper layer (or the UE) of the UE (or the wake-up receiver) initiates (620) a T310 or WUS_T310 timer after receiving N310 or WUS_N310 consecutive out-of-sync indications from the first out-of-sync indication 610. If the UE receives N311 or WUS_N311 consecutive in-sync indications from the first in-sync indication 630, the T310 or T310_WUS timer is stopped 640. Otherwise, the UE declares a radio link failure (650), and the UE (or the wake-up receiver) turns on the main radio and starts a T311 or WUS_T311 timer. During the operation of the T311 or WUS_T311 timer, the UE performs cell selection to find a suitable cell. If the UE finds a suitable cell through cell selection, the T311 or WUS_T311 timer is stopped, and the UE transmits an RRC reestablishment request message to the base station of the cell and starts a T301 or WUS_T301 timer (660). If the RRC reestablishment operation is not successfully completed and the T301 or WUS_T301 timer expires, the UE transitions to the RRC_IDLE state (680). In this case, the main radio 601 may be turned off, and the wake-up receiver 602 may perform wake-up signal reception in RRC_IDLE. If the RRC reestablishment operation is successfully completed within the T301 or WUS_T301 timer, the UE transitions to a normal RRC_CONNECTED state. In this case, in an embodiment, the main radio 601 may be changed to be in the sleep state, and the wake-up receiver 602 may perform wake-up signal reception in RRC_CONNECTED. In case that the UE cannot find a suitable cell through cell selection and the T311 or WUS_T311 timer is expired, the UE may transition to an RRC_IDLE state (670). In this case, the UE may turn off the main radio 601, and the wake-up receiver 602 may receive a wake-up signal in RRC_IDLE.

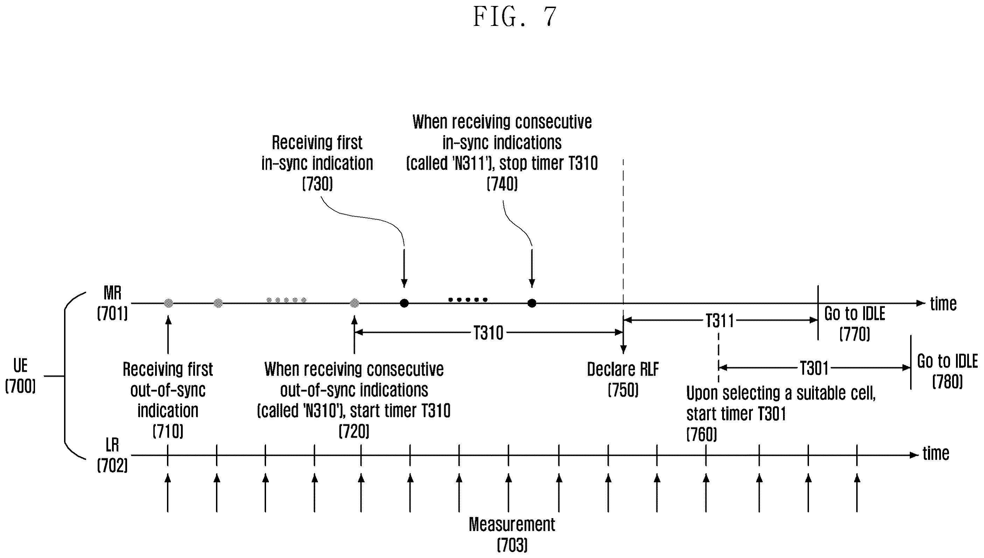

FIG. 7 illustrates an example of a radio link monitoring scheme of a UE having a wake-up receiver according to various embodiments of the disclosure.

Referring to FIG. 7, a scheme in which a wake-up receiver 702 of a UE 700 triggers a main radio 701 to perform radio link monitoring, and the main radio 701 is still performing radio link monitoring will be described.

The wake-up receiver 702 may receive a new synchronization signal or an existing synchronization signal for the wake-up receiver during the main radio 701 being off/sleep and periodically measure the magnitude or quality of the signal (703). In case that the magnitude or quality of the signal is less than the threshold value configured by the base station, the main radio 701 may be turned on, and the main radio 701 may perform radio link monitoring. The configuration information including a period during which the wake-up receiver is required to measure the synchronization signals may be configured from the base station via an upper signal.

In an embodiment, the main radio 701 may perform radio link monitoring to determine whether the radio link is in-sync or out-of-sync, and transmit the result to an upper layer of the UE, then the main radio 701 may again be turned off or transition to a sleep state, and the wake-up receiver 702 may perform wake-up signal monitoring and measurement of a synchronization signal (703).

In an embodiment, while the wake-up receiver 702 is monitoring a wake-up signal and performing measurement of a synchronization signal, the main radio 701 may be in an off or sleep state, and timers such as T310, T301, and T311 may be stopped and not proceed. Timers such as T310, T301, and T311 may be restarted only when the main radio 701 is in the on state. Therefore, parameters related to radio link monitoring, including the above timers, may be stored in the UE so as to be maintained regardless of the on/off/sleep of the main radio.

In an embodiment, separate parameters for radio link monitoring may be configured for a case in which the wake-up receiver 702 is configured and activated and a case in which the wake-up receiver 702 is not configured or configured but not activated. That is, the parameters and timers for radio link monitoring, including N310, N311, T310, T311, and T301, for the case in which transmission and reception are performed by only the main radio 701 may be configured by the base station, and the parameters and timers for radio link monitoring, including N310, N311, T310, T311, and T301, for the case in which transmission and reception are performed by the main radio 701 and the wake-up receiver 702 may be separately configured by the base station.

In an embodiment, when only radio link monitoring is performed in the case where triggering due to the synchronization signal measurement of the wake-up receiver is present, the upper layer of the UE starts a T310 timer (720) after receiving N310 consecutive out-of-sync indications from the first out-of-sync indication (710). If N311 consecutive in-sync indications are received from the first in-sync indication (730), the T310 timer is stopped (740). Otherwise, the UE declares a radio link failure (750) and then starts a T311 timer. The UE performs cell selection to find a suitable cell. If the UE finds a suitable cell through cell selection, the T311 timer is stopped, and the UE transmits an RRC reestablishment request message to the base station of the cell, and initiates the T301 timer (760). In case that the RRC reestablishment operation is not successfully completed and the T301 timer is expired, the UE transitions to the RRC_IDLE state (780). In this case, in an embodiment, the UE may turn off the main radio 701, and the wake-up receiver 702 may perform wake-up signal reception in RRC_IDLE. If the RRC reestablishment operation is successfully completed within the T301 timer, the UE transitions to a normal RRC_CONNECTED state. In an embodiment, the UE may change the main radio 701 to be in a sleep state, and the wake-up receiver 702 may perform wake-up signal reception in RRC_CONNECTED. If the UE fails to find a suitable cell through cell selection and the T311 timer expires, the UE transitions to the RRC_IDLE state (770). In this case, in an embodiment, the main radio may be turned off, and the wake-up receiver 702 may perform wake-up signal reception in RRC_IDLE.

Although FIG. 7 has described a case in which the main radio 701 performs radio link monitoring when the wake-up receiver 702 triggers by the above-described synchronization signal measurement, the above-described content may also be applied to a case in which the main radio 701 performs radio link monitoring when the wake-up receiver 702 receives a wake-up signal and turns on the main radio.

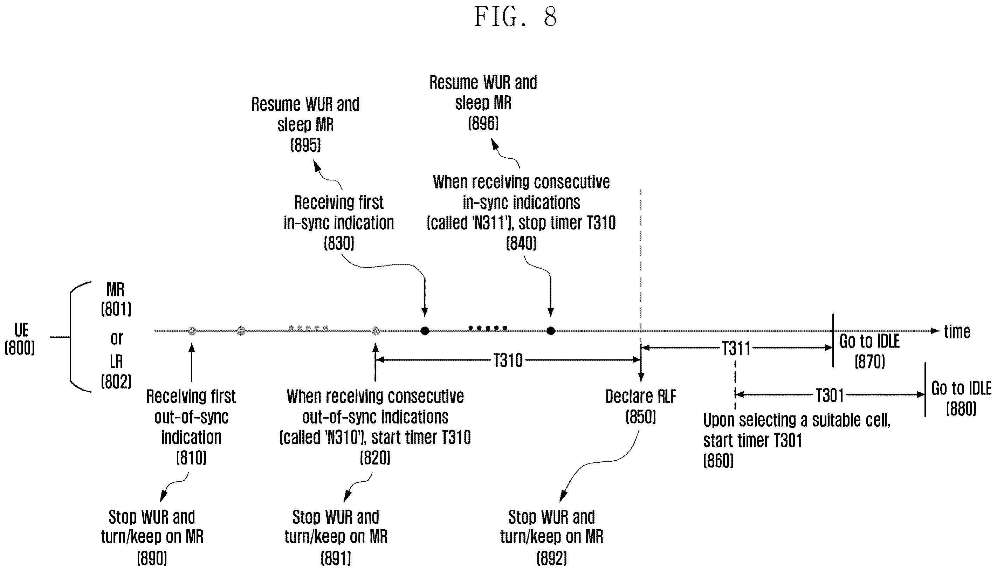

FIG. 8 illustrates an example of a radio link monitoring scheme of a UE having a wake-up receiver according to various embodiments of the disclosure.

FIG. 8 provides a UE procedure for whether to still receive a wake-up signal through a wake-up receiver and change the main radio to an off or sleep state in order to receive a downlink signal when a UE 800 performs radio link monitoring through a main radio 801 or a wake-up receiver 802.

In an embodiment, when the main radio or the wake-up receiver determines the first out-of-sync indication (810), the UE may turn on the main radio or maintain the on state to stop receiving a wake-up signal through the wake-up receiver and receive a downlink signal directly through the main radio (890). The UE may transmit information related to the wake-up receiver and main radio operation to the base station through an uplink channel or signal. The information may include information indicating that the wake-up receiver has been changed to an off state and thus cannot monitor a wake-up signal, or information indicating that the main radio has been changed to an on state and thus can monitor a downlink signal.

In an embodiment, when the main radio or the wake-up receiver determines N310 consecutive out-of-sync indications and initiates timer T310 (820), the UE may turn on the main radio or maintain the on state to stop receiving a wake-up signal via the wake-up receiver and directly receive a downlink signal via the main radio (891). The UE may transmit information related to the wake-up receiver and main radio operation to the base station through an uplink channel or signal. The information may include information that the wake-up receiver has been changed to an off state and thus cannot monitor a wake-up signal, or information that the main radio has been changed to an on state and thus can monitor a downlink signal.

In an embodiment, when the main radio or the wake-up receiver determines the first in-sync indication (830), the UE may turn on the wake-up receiver to receive a wake-up signal through the wake-up receiver, monitor a wake-up signal, and turn off the main radio or change the main radio to a sleep state (895). The UE may transmit information related to the wake-up receiver and main radio operation to the base station through an uplink channel or signal. The information may include information indicating that a wake-up receiver has changed to an on state or is in an on state so as to monitor a wake-up signal, or information indicating that a main radio has turned off or is in a sleep state so as to be unable to monitor a downlink signal.

In an embodiment, in case that the main radio or the wake-up receiver has determined N311 consecutive in-sync indications and has stopped the timer T310 (840), the UE may turn on the wake-up receiver to receive a wake-up signal through the wake-up receiver, monitor a wake-up signal, and turn off the main radio or change the main radio to a sleep state (896). The UE may transmit information related to the wake-up receiver and main radio operation to the base station through an uplink channel or a signal. The information may include information indicating that the wake-up receiver has been changed to an on state or is in an on state so as to monitor a wake-up signal, or information indicating that the main radio has been turned off or is in a sleep state so as to not be able to monitor a downlink signal.

In an embodiment, if the main radio or the wake-up receiver declares RLF due to timer T310 being expired (850), the UE turns on the main radio or maintains the on state to stop receiving a wake-up signal through the wake-up receiver (892) and directly receive a downlink signal through the main radio, and starts timer T311. The UE may transmit the information related to the wake-up receiver and the main radio operation to the base station through an uplink channel or signal. While the T311 timer is running, the UE performs cell selection in order to find a suitable cell. If the UE finds a suitable cell through cell selection, the T311 timer is stopped, and the UE transmits an RRC reestablishment request message to the base station of the cell and starts a T301 timer (860). If the RRC reestablishment operation is not successfully completed and the T301 timer is expired, the UE transitions to the RRC_IDLE state (880). If the RRC reestablishment operation is successfully completed within the T301 timer, the UE transitions to a normal RRC_CONNECTED state. If the UE fails to find a suitable cell through cell selection and the T311 or WUS_T311 timer expires, the UE may transition to the RRC_IDLE state (870).

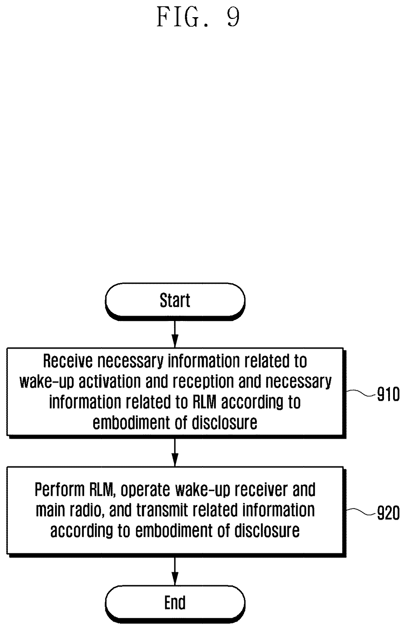

FIG. 9 is a flowchart illustrating an operation for radio link monitoring of a UE having a wake-up receiver according to various embodiments of the disclosure.

Referring to FIG. 9, in operation 910, the UE may receive a wake-up activation signal from the base station to receive a wake-up signal by using the wake-up receiver, or receive a wake-up deactivation signal from the base station to no longer receive a wake-up signal by using the wake-up receiver. In addition, the UE may receive information necessary for wake-up signal reception from the base station. In an embodiment, the UE may receive information including at least one of whether to use the wake-up receiver and configuration information for receiving a wake-up signal, from the base station. In addition, the UE may also receive information necessary for performing radio link monitoring from the base station.

In operation 920, the UE may perform radio link monitoring according to an embodiment of the disclosure, determine and operate the operation of the wake-up receiver and the main radio, and transmit related information to the base station. In an embodiment, radio link monitoring for a legacy UE may be performed if a wake-up receiver is not configured or not activated.

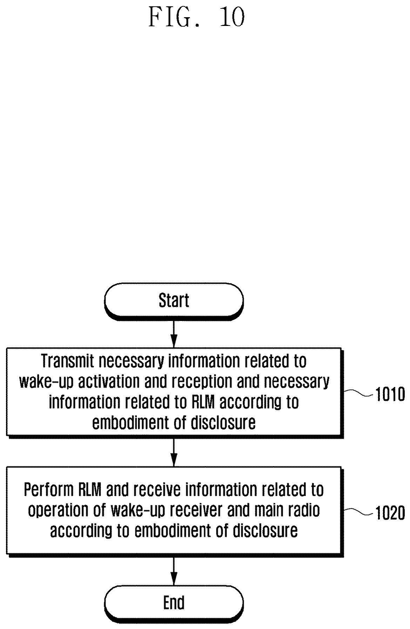

FIG. 10 is a flowchart illustrating operation of a base station for transmitting a downlink signal according to various embodiments of the disclosure.

Referring to FIG. 10, in step 1010, the base station may transmit a wake-up activation signal to a UE to cause the UE to receive a wake-up signal by using a wake-up receiver, or may transmit a wake-up deactivation signal to the UE to cause the UE to no longer receive a wake-up signal by using a wake-up receiver. In addition, the base station may transmit information necessary for receiving a wake-up signal to the UE. In an embodiment, the base station may transmit information including at least one of whether to use the wake-up receiver and configuration information for receiving a wake-up signal, to the UE. In addition, the base station may transmit information necessary for radio link monitoring of the UE to the UE.

In operation 1020, the base station may transmit a wake-up signal and a synchronization signal for performing radio link monitoring according to an embodiment of the disclosure. In an embodiment, a wake-up receiver is turned on so as to be configured or activated to search for a wake-up signal, and if a wake-up signal is transmitted so that the UE can receive the wake-up signal, a synchronization signal according to an embodiment of the disclosure may be transmitted. In an embodiment, when the base station does not configure a wake-up receiver or the wake-up receiver is not activated, a signal may be transmitted based on radio link monitoring for an existing legacy UE. In an embodiment, the base station may receive information related to operation of the wake-up receiver and the main radio from the UE.

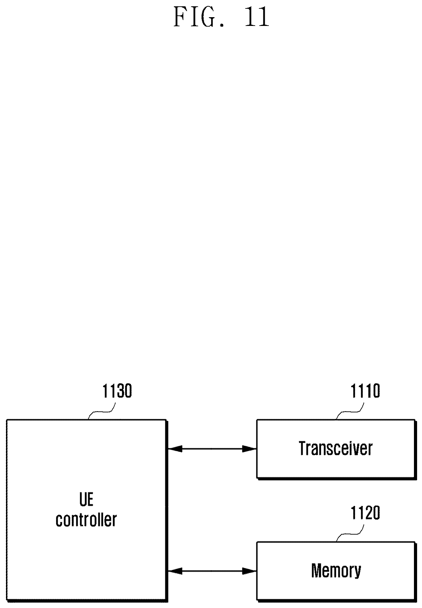

FIG. 11 illustrates a structure of a UE according to various embodiments of the disclosure.

As illustrated in FIG. 11, the UE of the disclosure may include a controller 1130, a transceiver 1110, and a memory 1120. However, components of the UE are not limited to the above-described example. For example, the UE may include a larger or smaller number of components than the above-described components. Furthermore, the controller 1130, the transceiver 1110, and the memory 1120 may be implemented in the form of a single chip. According to an embodiment, the transceiver 1110 of FIG. 11 may include the transmitter and the receiver.

According to an embodiment, the controller 1130 may control a series of processes such that the UE can operate according to the above-described embodiments of the disclosure. The controller 1130 may include one or more controllers, and may execute programs stored in the memory 1120 so that the UE having a WUR can perform the above-described operations for performing radio link monitoring.

The transceiver 1110 may transmit/receive signals with base stations. The signals transmitted/received with base stations may include control information and data. The transceiver 1110 may include an RF transmitter configured to up-convert and amplify the frequency of transmitted signals, an RF receiver configured to low-noise-amplify received signals and down-convert the frequency thereof, and the like. However, this is only an embodiment of the transceiver 1110, and the components of the transceiver 1110 are not limited to the RF transmitter and the RF receiver. In addition, the transceiver 1110 may receive signals through a radio channel, output the same to the controller 1130, and transmit signals output from the controller 1130 through the radio channel.

According to an embodiment, the memory 1120 may store programs and data necessary for operations of the UE. In addition, the memory 1120 may store control information or data included in signals transmitted/received by the UE. The memory 1120 may include storage media such as a ROM, a RAM, a hard disk, a CD-ROM, and a DVD, or a combination of storage media. The memory 1120 may include one or more memories, and according to an embodiment, the memory 1120 may store programs for performing, by the UE having a WUR, the operations for performing radio link monitoring according to above-described embodiments of the disclosure.

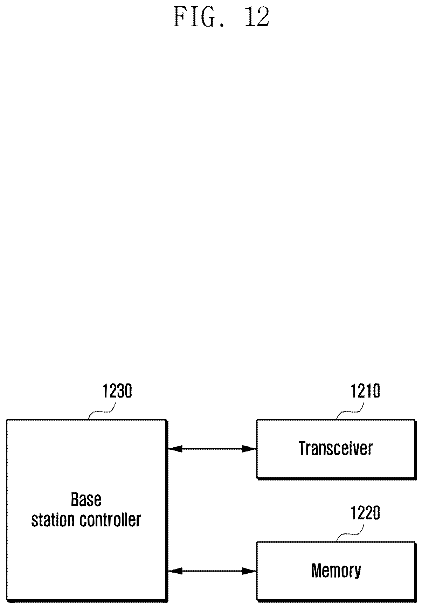

FIG. 12 illustrates a structure of a base station according to various embodiments of the disclosure.

As illustrated in FIG. 12, the base station of the disclosure may include a controller 1230, a transceiver 1210, and a memory 1220. However, components of the base station are not limited to the above-described example. For example, the base station may include a larger or smaller number of components than the above-described components. In addition, the controller 1230, the transceiver 1210, and the memory 1220 may be implemented in the form of a single chip.

The controller 1230 may control a series of processes such that the base station can operate according to the above-described embodiments of the disclosure. The controller 1230 may include one or more controllers, and may execute programs stored in the memory 1220 so that the base station can operate according to the embodiments of the disclosure.

The transceiver 1210 may transmit/receive signals with UEs. The signals transmitted/received with UEs may include control information and data. The transceiver 1210 may include an RF transmitter configured to up-convert and amplify the frequency of transmitted signals, an RF receiver configured to low-noise-amplify received signals and down-convert the frequency thereof, and the like. However, this is only an embodiment of the transceiver 1210, and the components of the transceiver 1210 are not limited to the RF transmitter and the RF receiver. In addition, the transceiver 1210 may receive signals through a radio channel, output the same to the controller 1230, and transmit signals output from the controller 1230 through the radio channel.

According to an embodiment, the memory 1220 may store programs and data necessary for operations of the base station. In addition, the memory 1220 may store control information or data included in signals transmitted/received by the base station. The memory 1220 may include storage media such as a ROM, a RAM, a hard disk, a CD-ROM, and a DVD, or a combination of storage media. In addition, the memory 1220 may include multiple memories. According to an embodiment, the memory 1220 may store programs for operating the base station according to the embodiments of the disclosure.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. For example, a part or all of an embodiment may be combined with a part or all of one or more other embodiments, and it is natural that an implementation of such combination also corresponds to an embodiment proposed by the disclosure. Therefore, the scope of the disclosure should not be defined as being limited to the embodiments set forth herein, but should be defined by the appended claims and equivalents thereof.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method of a terminal in a communication system, the method comprising:

   receiving, from a base station, configuration information comprising information for receiving a wake-up signal (WUS) and information for radio link monitoring (RLM); and
   based on the configuration information, performing radio link monitoring by using at least one of a main radio (MR) or a wake-up receiver (WUR).

2. The method of claim 1, wherein the configuration information comprises at least one parameter related to radio link monitoring of the WUR, and
   wherein, in case that the WUR is activated, the radio link monitoring is performed using the WUR, based on the at least one parameter related to the radio link monitoring of the WUR.

3. The method of claim 1, wherein the configuration information comprises at least one parameter related to radio link monitoring of the MR, and
   wherein, in case that the WUR is activated, the radio link monitoring is performed using the WUR, based on the at least one parameter related to the radio link monitoring of the MR.

4. The method of claim 1, comprising:

measuring a synchronization signal received using the WUR; and
triggering the MR in case that a measurement result of the synchronization signal has a smaller value than a predetermined threshold value,
wherein the radio link monitoring is performed using the MR, based on the triggering of the MR.

5. The method of claim 1, further comprising, based on at least one of a case where the WUR or the MR determines at least one out-of-sync indication, a case where the WUR or the MR determines consecutive N310 out-of-sync indications, or a case where the WUR or the MR determines a radio link failure (RLF), changing the WUR to an off state, and changing the MR to an on state or maintaining the on state of the MR,
wherein N310 is a value determined by the configuration information.

6. The method of claim 5, further comprising transmitting, to the base station, information indicating that the WUR is in the off state and information indicating that the MR is in the on state.

7. The method of claim 1, further comprising, based on at least one of a case where the WUR or the MR determines at least one in-sync indication and a case where the WUR or the MR determines consecutive N311 in-sync indications, changing the WUR to an on state and changing the MR to an off state or a sleep state,
wherein N311 is a value determined by the configuration information.

8. The method of claim 7, further comprising transmitting, to the base station, information indicating that the WUR is in the on state and information indicating that the MR is in the off or sleep state.

9. A terminal in a communication system, comprising:

a transceiver; and
a controller configured to
receive, from a base station, configuration information comprising information for receiving a wake-up signal (WUS) and information for radio link monitoring (RLM), and
based on the configuration information, perform radio link monitoring by using at least one of a main radio (MR) and a wake-up receiver (WUR).

10. The terminal of claim 9, wherein the configuration information comprises at least one parameter related to radio link monitoring of the WUR, and
wherein, in case that the WUR is activated, the radio link monitoring is performed using the WUR, based on the at least one parameter related to the radio link monitoring of the WUR.

11. The terminal of claim 9, wherein the configuration information comprises at least one parameter related to radio link monitoring of the MR, and
wherein, in case that the WUR is activated, the radio link monitoring is performed using the WUR, based on the at least one parameter related to the radio link monitoring of the MR.

12. The terminal of claim 9, wherein the controller is configured to:

measure a synchronization signal received using the WUR; and
trigger the MR in case that a measurement result of the synchronization signal has a smaller value than a predetermined threshold value,
wherein the radio link monitoring is performed using the MR, based on the triggering of the MR.

13. The terminal of claim 9, wherein the controller is further configured to, based on at least one of a case where the WUR or the MR determines at least one out-of-sync indication, a case where the WUR or the MR determines consecutive N310 out-of-sync indications, or a case where the WUR or the MR determines a radio link failure (RLF), change the WUR to an off state, and change the MR to an on state or maintain the on state of the MR, and
wherein N310 is a value determined by the configuration information.

14. The terminal of claim 13, wherein the controller is further configured to transmit, to the base station, information indicating that the WUR is in the off state and information indicating that the MR is in the on state.

15. The terminal of claim 9, wherein the controller is further configured to, based on at least one of a case where the WUR or the MR determines at least one in-sync indication and a case where the WUR or the MR determines consecutive N311 in-sync indications, change the WUR to an on state and change the MR to an off state or a sleep state, and wherein N311 is a value determined by the configuration information.

# FIG. 1

# FIG. 2

SS/PBCH periodicity = P

Half frame = 0.5 ms

SS/PBCH block

#0  #1  #2  #3  #4  . . . . .  #L-1

time

t1
(201)

t2
(202)

UE1
(205)

(203)

#d0

#d1

#d2    Beam sweeping

#d3

#d4

gNB

UE2
(206)

(204)

# FIG. 3

UE                                                                    gNB

① —————— Random Access Preamble ——————→
              Message 1
                (310)

← —————— Random Access Response ——————      ②
              Message 2
                (320)

③ —————— Scheduled Transmission ——————→
              Message 3
                (330)

← —————— Contention Resolution ——————      ④
              Message 4
                (340)

# FIG. 4

401
UE

402
gNB

UE capability information request ← 410

UE capability information → 420

# FIG. 5

# FIG. 6

Receiving first
in-sync indication
(630)

When receiving consecutive
in-sync indications
(called 'N311'), stop timer T310
(640)

MR
(601)

time

T311 ── Go to IDLE
(670)

UE
(600)

T301 ── Go to IDLE
(680)

Upon selecting a suitable cell,
start timer T301
(660)

LR
(602)

time

T310

Receiving first
out-of-sync
indication
(610)

When receiving consecutive
out-of-sync indications
(called 'N310'), start timer T310
(620)

Declare RLF
(650)

EP 4 727 220 A1

# FIG. 7

Receiving first
in-sync indication
(730)

When receiving consecutive
in-sync indications
(called 'N311'), stop timer T310
(740)

MR
(701)

time

T310

Go to IDLE
(770)

T311

UE
(700)

Receiving first
out-of-sync
indication
(710)

When receiving consecutive
out-of-sync indications
(called 'N310'), start timer T310
(720)

Declare RLF
(750)

Upon selecting a suitable cell,
start timer T301
(760)

T301

Go to IDLE
(780)

LR
(702)

time

Measurement
(703)

EP 4 727 220 A1

# FIG. 8

EP 4 727 220 A1

# FIG. 9

```
        ┌─────────────┐
        │    Start     │
        └──────┬──────┘
               │
               ▼
┌────────────────────────────────┐
│ Receive necessary information   │
│ related to wake-up activation   │── 910
│ and reception and necessary     │
│ information related to RLM       │
│ according to embodiment of      │
│ disclosure                       │
└────────────────┬───────────────┘
                 │
                 ▼
┌────────────────────────────────┐
│ Perform RLM, operate wake-up    │
│ receiver and main radio, and    │── 920
│ transmit related information     │
│ according to embodiment of      │
│ disclosure                       │
└────────────────┬───────────────┘
                 │
                 ▼
        ┌─────────────┐
        │     End      │
        └─────────────┘
```

FIG. 10

```
                    ┌──────────────┐
                    │    Start     │
                    └──────┬───────┘
                           │
                           ▼
    ┌─────────────────────────────────────────┐
    │  Transmit necessary information related to │
    │ wake-up activation and reception and necessary │ ～1010
    │   information related to RLM according to │
    │         embodiment of disclosure          │
    └─────────────────────┬─────────────────────┘
                           │
                           ▼
    ┌─────────────────────────────────────────┐
    │ Perform RLM and receive information related to │
    │   operation of wake-up receiver and main radio │ ～1020
    │      according to embodiment of disclosure │
    └─────────────────────┬─────────────────────┘
                           │
                           ▼
                    ┌──────────────┐
                    │     End      │
                    └──────────────┘
```

FIG. 11

1130

1110

UE controller

Transceiver

1120

Memory

FIG. 12

```
      1230                              1210
  ┌──────────────┐              ┌──────────────────┐
  │     Base     │ ◄─────────►  │    Transceiver    │
  │  station     │              └──────────────────┘
  │  controller  │                   1220
  │              │ ◄─────────►  ┌──────────────────┐
  │              │              │      Memory       │
  └──────────────┘              └──────────────────┘
```

## INTERNATIONAL SEARCH REPORT

| International application No. |
| --- |
| **PCT/KR2024/009533** |

### A. CLASSIFICATION OF SUBJECT MATTER

**H04W 52/02**(2009.01)i; **H04W 76/27**(2018.01)i; **H04W 24/08**(2009.01)i; **H04W 88/02**(2009.01)i

According to International Patent Classification (IPC) or to both national classification and IPC

### B. FIELDS SEARCHED

Minimum documentation searched (classification system followed by classification symbols)

H04W 52/02(2009.01); H04L 5/00(2006.01); H04W 24/08(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: wakeup signal, radio link monitor, configuration, main radio, wakeup receiver

### C. DOCUMENTS CONSIDERED TO BE RELEVANT

| Category* | Citation of document, with indication, where appropriate, of the relevant passages | Relevant to claim No. |
| --- | --- | --- |
| Y | US 2022-0264345 A1 (OFINNO, LLC) 18 August 2022 (2022-08-18)<br>See paragraphs [0335]-[0400]; and figures 26A-27 and 30-32. | 1,9 |
| A | | 2-8,10-15 |
| Y | 3GPP; TSG RAN; Study on low-power wake up signal and receiver for NR (Release 18). 3GPP TR 38.869 V0.2.0. 16 June 2023.<br>See sections 7.2-7.2.2.1. | 1,9 |
| A | CATT. Discussion on LP-WUS in RRC_CONNECTED state. R2-2304937, 3GPP TSG-RAN WG2 Meeting #122. Incheon, Korea. 12 May 2023.<br>See sections 2-2.3. | 1-15 |
| A | ERICSSON. LP-WUS/WUR for RRC Connected. R2-2306239, 3GPP TSG-RAN WG2 Meeting #122. Incheon, Korea. 12 May 2023.<br>See sections 2-2.3. | 1-15 |

✓ Further documents are listed in the continuation of Box C.  ✓ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **10 October 2024** | **10 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 727 220 A1**

**INTERNATIONAL SEARCH REPORT**

International application No.

**PCT/KR2024/009533**

### C. DOCUMENTS CONSIDERED TO BE RELEVANT

| Category* | Citation of document, with indication, where appropriate, of the relevant passages | Relevant to claim No. |
|---|---|---|
| A | US 2022-0116875 A1 (TELEFONAKTIEBOLAGET LM ERICSSON (PUBL)) 14 April 2022 (2022-04-14)<br>See paragraphs [0106]-[0150]; and figures 9A-12. | 1-15 |

Form PCT/ISA/210 (second sheet) (July 2022)

43

**INTERNATIONAL SEARCH REPORT**
Information on patent family members

| International application No. |
| --- |
| **PCT/KR2024/009533** |

| Patent document cited in search report | | | Publication date (day/month/year) | Patent family member(s) | | | Publication date (day/month/year) |
| --- | --- | --- | --- | --- | --- | --- | --- |
| US | 2022-0264345 | A1 | 18 August 2022 | US | 11330456 | B2 | 10 May 2022 |
| | | | | US | 11997517 | B2 | 28 May 2024 |
| | | | | US | 2020-0260304 | A1 | 13 August 2020 |
| US | 2022-0116875 | A1 | 14 April 2022 | EP | 3909301 | A1 | 17 November 2021 |
| | | | | TW | 202041090 | A | 01 November 2020 |
| | | | | WO | 2020-145869 | A1 | 16 July 2020 |